(19)

Europäisches Patentamt

European Patent Office

Office européen des brevets

(11) **EP 4 582 188 A1**

(12) **EUROPEAN PATENT APPLICATION**

(43) Date of publication:
**09.07.2025 Bulletin 2025/28**

(21) Application number: **24192597.3**

(22) Date of filing: **02.08.2024**

(51) International Patent Classification (IPC):
**B03D 1/00** (2006.01)     **B03D 1/008** (2006.01)
**B03D 1/02** (2006.01)     **C10B 53/07** (2006.01)
**C10J 3/00** (2006.01)     **C09C 1/48** (2006.01)

(52) Cooperative Patent Classification (CPC):
**C09C 1/48; B03D 1/00; B03D 1/008; B03D 1/02;
B03D 1/023; C09C 1/482; C09C 1/50; C10B 7/02;
C10B 19/00; C10B 49/02; C10B 53/07; C10J 3/00;
C10J 3/62; F27B 9/062; F27B 9/142;**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.01.2024   EP 24150495**
            **05.01.2024   EP 24150490**
            **05.01.2024   EP 24150491**
            **05.01.2024   EP 24150493**
            **05.01.2024   EP 24150494**
            **05.01.2024   EP 24150497**
            **05.01.2024   EP 24150498**

(71) Applicant: **Orion Engineered Carbons GmbH
65760 Eschborn (DE)**

(72) Inventors:
• **BOWLES, ALexander
  50939 Köln (DE)**
• **DETERS, David
  53173 Bonn (DE)**
• **SCHINKEL, Arndt-Peter
  56112 Lahnstein (DE)**
• **STANYSCHÖFSKY, Michael
  50354 Hürth (DE)**
• **TIMMERMANS, Eddy
  50354 Hürth (DE)**
• **WIDJAJA, Andreas
  64521 Gross-Gerau (DE)**

(74) Representative: **f & e patent
Braunsberger Feld 29
51429 Bergisch Gladbach (DE)**

(54) **GASIFICATION OF RECOVERED CARBON BLACK**

(57)     The present invention relates to the treatment of recovered carbon black. It has surprisingly been found that the gasification and the subsequent flotation of a recovered carbon black reduces the coke content as well as the ash content.

FIG. 4

**(Cont. next page)**

(52) Cooperative Patent Classification (CPC): (Cont.)
**F27B 9/185; F27D 3/04;** B03D 2201/02;
B03D 2203/08; C10J 2300/094; C10J 2300/0969;
C10J 2300/0976; C10J 2300/1223;
C10J 2300/1253

**Description**

## TECHNICAL FIELD

The present invention relates to the treatment of recovered carbon black. It has surprisingly been found that the gasification and the subsequent flotation of a recovered carbon black reduces the coke content as well as the ash content.

## TECHNICAL BACKGROUND

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

Recycled blacks are carbon blacks typically obtained from end-of-life products containing carbon black, such as scrap tires (waste tires), and obtained by recycling processes. Production of recycled blacks typically involves 1 to 3 processes. Firstly, a pyrolysis step is deployed to decompose organic components such as rubbers or plastics. Secondly, an optional demineralization step is deployed to dissolve inorganic additives or impurities. Thirdly, the resulting material is milled to produce a controlled particle size distribution.

Tire pyrolysis of end-of-life products containing carbon black is usually carried out at low temperatures and produces a liquid, gaseous and solid fraction. The liquid fraction can then be used to produce new or virgin carbon black in an entrained flow reactor such as a furnace reactor. US 2002/0117388 A1 relates to the pyrolysis of waste rubber materials, including scrap tires. The obtained carbon black is generally referred to as "recovered carbon black" (rCB).

rCB is a complex mixture resulting from the compounds used in pyrolysis. The compounds used in the pyrolysis process may contain various components (i.e. ash) other than carbon black, such as inorganic additives and fillers (e.g., zinc oxide, silicon oxide, sulphur compounds and calcium carbonate) and traces of steel.

However, the performance of rCB is generally poor compared to carbon black produced from e.g. a standard hydrocarbon feedstock such as oil. Accordingly, it is desired to provide a method in which the rCB is treated.

Particularly, it is desired to reduce the coke content as well as the ash content in the rCB in order to provide treated carbon black. It has been surprisingly found that the gasification of a carbon black-containing feedstock, such as recovered carbon black, at a temperature of 730 °C to 950 °C and the subsequent flotation lead to an improved carbon black compared to rCB.

## SUMMARY OF THE INVENTION

A method for the treatment of recovered carbon black is provided comprising, (A) providing recovered carbon black and gasification of the recovered carbon black at a temperature of 730 °C to 950 °C, (B) subjecting the recovered carbon black of step (A) after the gasification to an aqueous flotation slurry, (C) treating the recovered carbon black in the aqueous flotation slurry by flotation, (D) separating the concentrate comprising the treated carbon black and the flotation tailings.

A mixture of carbon black obtained according to the invention and virgin carbon black is provided.

A rubber article comprising carbon black comprising coke is provided, wherein the rubber article has an abrasion of less than 120 mm$^3$, measured at 23 °C DIN ISO 4649:2014-03, 10 N.

## BRIEF DESCRIPTION OF THE DRAWINGS

Figure 1 (FIG. 1): Ash components associated in the rCB.
Figure 2 (FIG. 2): Ash components associated in the rCB.
Figure 3 (FIG. 3): Ash components associated in the rCB.
Figure 4 (FIG. 4): Flotation device.

## DETAILED DESCRIPTION

It must be noted that, as used in the specification and the appended claims, the singular forms "a," "an" and "the" include plural referents unless the context clearly dictates otherwise.

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations etc. referred to herein are by weight, unless specified otherwise. If no basis for parts, amounts, concentrations etc. are indicated, the parts, amounts, concentrations etc. are based on the respective composition/atmosphere/gas in which the respective material/parameter etc. is present.

The pyrolysis of rubber articles generally involves heating the rubber articles to temperatures, e.g., of at least 300 °C in the absence of oxygen in order to volatilize and decompose the rubber articles, producing oil, gas (pyrolysis gas), and char (such as recovered carbon black).

As used herein, the term "rubber articles" refers to articles composed of rubber, e.g., composed of at least 40 wt.-% of rubber, based on the total weight of the rubber article. Examples of rubber articles include, but are not limited to, tires, conveyer belts, gaskets, such as door gaskets, drive belts, floor mats, shoe soles, belts, cable sheaths, hoses, and the like. Preferred rubber articles include tires. The term "rubber" includes both natural and synthetic rubbers or mixtures thereof. Natural rubber (polyisoprene) may be obtained from rubber trees (Helvea brasiliensis), guayule, and dandelion. Synthetic rubber may comprise styrene-butadiene rubber such as emulsion-styrene-butadiene rubber and solution-styrene-butadiene rubber, polybutadiene, polyisoprene, ethylene-propylene-diene rubber, ethylene-propylene rubber, butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing.

"Carbon black" as referred to herein means a material composed substantially, e.g. to more than 50 wt.%, or more than 70 wt.% or more than 80 wt.%, based on its total weight of carbon that is produced by pyrolysis or radical driven abstraction of not carbon atoms of a carbon black feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail. However, it is possible that "carbon black" comprises impurities as mentioned further below.

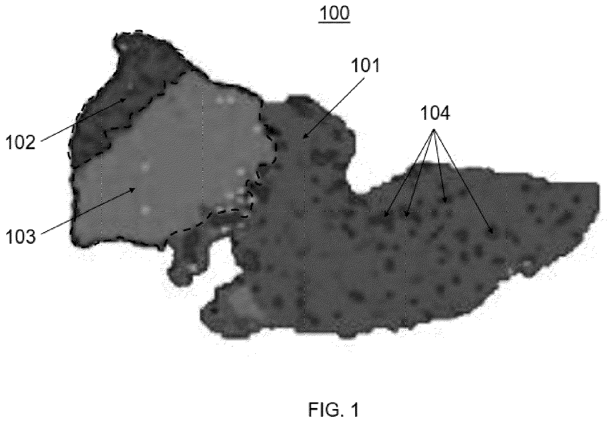

The present invention relates to the treatment of recovered carbon black (rCB). It should be noted that recovered carbon black (rCB) - in comparison to virgin carbon black (vCB) - comprises ash (ash components) that is typically embedded in the carbon of the rCB, attached to the carbon of the rCB, attached on the surface of the carbon of the rCB, and/or associated in the carbon of the rCB. The ash or the ash components can be seen in figures 1 to 3.

Ash typically comprise metal, metal compounds, silicon, oxygen, sulphur and/or silica, preferably metal comprises zinc, silicon, calcium, cobalt, manganese, potassium, aluminium, and/or iron. The ash content is typically determined according to ASTM D 1506-15 at 550 °C, 16 h.

Accordingly, the specific rCB particles and the ash components are generally not present as separate components so that a rCB mixture generally not comprise merely a distinct silica particle and a distinct carbon black particle.

Accordingly, rCB is typically derived (or recovered) from the pyrolysis of a particulate carbon-black containing feedstock, such as rubber granulate, plastic granulate, and/or biomass-based granulate, preferably rubber granulate.

Virgin carbon black is usually carbon black that is not derived (or recovered) from the pyrolysis of a particulate carbon-black containing feedstock, such as rubber granulate, plastic granulate, and/or biomass-based granulate, preferably rubber granulate. Virgin carbon black is usually obtained from a furnace process, gas black process, acetylene black process, thermal black process or lamp black process by utilizing a fuel oil feedstock, or a feedstock that does not comprise carbon black. Thus, no carbon black that is generally present in a feedstock is recovered to produce virgin carbon black.

The present invention relates to a method for the treatment of recovered carbon black comprising, (A) providing recovered carbon black and gasification of the recovered carbon black at a temperature of 730 °C to 950 °C, (B) subjecting the recovered carbon black of step (A) after the gasification to an aqueous flotation slurry, (C) treating the recovered carbon black in the aqueous flotation slurry by flotation, (D) separating the concentrate comprising the treated carbon black and the flotation tailings.

It is possible to use either a frothless system for the flotation or a froth system. For a frothless system a reflux flotation cell (RFC) can be used. For instance, a reflux flotation cell from FLSmidth A/S, Denmark can be used.

However, it is also possible that the flotation is a froth flotation. For instance, the treatment of step (C) is carried out in a froth flotation device, such as mechanical froth flotation device, pneumatic froth flotation device, expansion froth flotation device and/or reverse-flotation unit.

The treatment of step (C) can be carried out in a mechanical froth flotation device comprising a rotor, preferably the rotational speed of the rotor is 500 to 2000 rpm, such as 1100 to 1300 rpm, 900 to 1100 rpm, or 700 to 900 rpm. The rotational speed has an influence of the relative reduction of the carbon content. It is desired to use a lower rotational speed such as 700 to 900 rpm. However, a higher rotational speed is beneficial for the total yield of the treated carbon black. Accordingly, 1100 to 1300 rpm for the rotor is desired for a higher total yield.

In general, the treatment of step (C) comprises the formation of bubbles and the carbon black of the recovered carbon black (or the recovered carbon black) is attached to the bubbles.

The gasification of the recovered carbon black comprising coke can be done at a temperature of 730 °C to 950 °C to selectively reduce the coke content with respect to the carbon black content of the recovered carbon black.

The gasification can be carried out by using $H_2O$ and/or $CO_2$. $H_2O$ is particularly preferred. For the gasification, $H_2O$ reacts with carbon of the recovered carbon black to $CO$ and $H_2$. Alternatively, $CO_2$ reacts with carbon of the recovered carbon black to $CO$. It has been surprisingly found that the gasification can be used to selectively remove coke that is present in carbon black. Coke is usually present in carbon black after the pyrolysis of a particulate carbon black-containing feedstock, such as waste tire rubber granulate.

Particularly, at low gasification temperatures, the selectivity of coke compared to carbon black is high. Accordingly, the gasification can be carried out at a temperature of 730 °C to 910 °C, preferably 730 °C to 900 °C, more preferably 740 to 890 °C, even more preferably 740 °C to 860 °C, and most preferably 790 to 850 °C. For instance, the gasification can be carried out at a temperature of 730 °C, 740 °C, 750 °C, 760 °C, 770 °C, 780 °C, 790 °C, 800 °C, 810 °C, 820 °C, 830 °C, 840 °C, or 850 °C. Said temperatures can be used as lower and upper limited for a specific temperature range. If the temperature exceeds 950 °C, it is believed that the selectivity is lower.

The gasification can be carried out by subjecting the recovered carbon black with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

The gasification can be carried out by subjecting the recovered carbon black with steam comprising 20 to 100 mol-% $H_2O$, preferably 30 to 100 mol-% $H_2O$, more preferably 40 to 90 mol-% $H_2O$, most preferably 50 to 80 mol-% $H_2O$, based on the total number of moles of the steam.

The gasification can be carried out by subjecting the recovered carbon black with a gas comprising 20 to 100 mol-% $H_2O$, preferably 30 to 100 mol-% $H_2O$, more preferably 40 to 90 mol-% $H_2O$, most preferably 50 to 80 mol-% $H_2O$, based on the total number of moles of the gas. Most preferably, the gasification can be carried out by subjecting the recovered carbon black with steam.

The gasification can be carried out by subjecting the recovered carbon black with a gas comprising 0 to 60 mol-% $N_2$, preferably 0 to 30 mol-% $N_2$, more preferably 0 to 20 mol-% $N_2$, most preferably 0 to 10 mol-% $N_2$, based on the total number of moles of the steam. Most preferably, the gasification can be carried out by subjecting the recovered carbon black with a gas free of nitrogen.

The gasification can be carried out by subjecting the recovered carbon black with a gas comprising 20 to 100 mol-% $CO_2$, preferably 30 to 100 mol-% $CO_2$, more preferably 40 to 90 mol-% $CO_2$, most preferably 50 to 80 mol-% $CO_2$, based on the total number of moles of the steam.

The gasification atmosphere in which the recovered carbon black is treated can comprise 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the recovered carbon black is treated.

The gasification atmosphere in which the recovered carbon black is treated can comprise 20 to 100 mol-% $H_2O$, preferably 30 to 100 mol -% $H_2O$, more preferably 40 to 90 mol-% $H_2O$, most preferably 50 to 80 mol-% $H_2O$, based on the total number of moles of the gasification atmosphere in which the recovered carbon black is treated.

The gasification atmosphere which in the recovered carbon black is treated can comprise 20 to 100 mol-% $CO_2$, preferably 30 to 100 mol-% $CO_2$, more preferably 40 to 90 mol-% $CO_2$, most preferably 50 to 80 mol-% $CO_2$, based on the total number of moles of the gasification atmosphere in which the recovered carbon black is treated.

The gasification can be carried out by subjecting the recovered carbon black with a gas comprising up to 20 mol-% $H_2$, preferably up to 10 mol-% $H_2$, more preferably up to 5 mol-% $H_2$, most preferably up to 1 mol-% $H_2$, based on the total number of moles of the gas. Preferably no $H_2$ is present in the gas that is subjecting the recovered carbon black.

The gasification atmosphere in which the recovered carbon black is treated can comprise up to 20 mol-% $H_2$, preferably up to 10 mol-% $H_2$, more preferably up to 5 mol-% $H_2$, most preferably up to 1 mol-% $H_2$, based on the total number of moles of the gasification atmosphere in which the recovered carbon black is treated.

The recovered carbon black can be heated to the required temperature for the gasification by using a burner _(or at least one burner), preferably the fuel for the burner is hydrogen or natural gas, preferably hydrogen. Thus, the burner _(or at least one burner) for the gasification can be a hydrogen burner _(or at least one hydrogen burner). A hydrogen burner only produces water that can directly be used for the gasification. Accordingly, it may not be necessary to provide steam or additionally water for the gasification. In other words, no water and/or $CO_2$ is (additionally) is subjected to a reactor for the gasification.

The required $H_2O$ for the gasification as well as the required heat can be provided by at least one hydrogen burner. The required $H_2O$ for the gasification as well as the required heat can be provided by an electrical heating unit.

The recovered carbon black can be milled before the gasification step, and/or wherein the obtained treated carbon black is milled after the gasification step. For instance, mechanical (impact) milling, jet milling, ultrasonic milling and/or electrical arc milling, preferably ultrasonic milling.

The gasification can be carried out for 1 min to 10 h, preferably 10 min to 5 h, more preferably 20 min to 3 h, and most preferably 30 min to 2 h.

Since the gasification selectively reduce the coke content (de-coking) in a recovered carbon black comprising coke, the obtained carbon black comprises a lower coke content compared to the recovered carbon black. A low coke content is particularly preferred since carbon black having a low coke content performs better as a filler in rubber articles, such as tires. For instance, the tensile strength, the tear resistance and/or the max loss factor tan(d) is improved.

The gasification can be carried out in a fluidized bed reactor, auger reactor, batch reactor, fixed bed reactor, electric furnace, multiple hearth furnace and/or rotary kiln

The method can further comprise the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a recovered carbon black are obtained.

The recovered carbon black can be derived from the pyrolysis of rubber granulate, plastic granulate, and/or biomass-based granulate, preferably rubber granulate. The recovered carbon black can be derived from the pyrolysis of a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler. The recovered carbon black can be derived from the pyrolysis of a cable sheath, a tube, a drive belt, a conveyor belt, a roll covering, a shoe sole, a hose, a sealing member, a profile, a damping element, a coating or a colored or printed article.

The pyrolysis and gasification can be carried out as a continuous process. The pyrolysis and gasification are carried out in a multi-layered pyrolysis reactor, such as a multiple hearth furnace. In a multi-layered pyrolysis reactor, the pyrolysis is generally performed in the pyrolysis zone of the reactor and the gasification is performed in the gasification zone of the reactor. Accordingly, the entire process is a continuous process wherein the material after the pyrolysis is subjected directly to the gasification, i.e. both processes are carried out in one reactor. Thus, the reactor is usually configured that the material is subjected to the pyrolysis and then, to the gasification.

The pyrolysis zone can be the zone in which the heating unit heats the material on each hearth to 360 to 740 °C (preferably 360 to 710 °C), and/or gasification zone can be the zone in which the burner(s) heat(s) the material on each hearth to 730 to 950 °C. As mentioned above, it is desired that the gasification zone is below the pyrolysis zone.

The uppermost hearth can define the pyrolysis zone, preferably in which the electrical heating unit heats the material on each hearth to 360 to 740 °C (preferably 360 to 710 °C). The two uppermost hearths can define the pyrolysis zone, preferably in which the electrical heating unit heats the material on each hearth to 360 to 740 °C (preferably 360 to 710 °C). The three uppermost hearths can define the pyrolysis zone, preferably in which the electrical heating unit heats the material on each hearth to 360 to 740 °C (preferably 360 to 710 °C). The four uppermost hearths can define the pyrolysis zone, preferably in which the electrical heating unit heats the material on each hearth to 360 to 740 °C (preferably 360 to 710 °C). A major benefit of a multiple hearth furnace is that the pyrolysis and gasification can occur in the same reactor. This has vastly lower heat losses when compared to doing the pyrolysis and gasification steps in separate reactors.

Each burner for each hearth in the gasification zone can be an oxy-fuel burner.

Accordingly, the method can further comprise the step, providing rubber granulate and pyrolyzing the rubber granulate to obtain recovered carbon black. The recovered carbon black can then be used for the gasification in step (A). Both the pyrolyzing and the gasification in step (A) can be carried out in a multi-layered pyrolysis reactor, such as a multiple hearth furnace.

It is particular preferred that the recovered carbon black is heated to the required temperature for the gasification by using an oxy-fuel burner. An oxy-fuel burner generally utilizes oxygen, such as pure oxygen, (in addition to the fuel). Preferably the pure oxygen contains less nitrogen than atmospheric air. This means that the oxy-fuel burner is generally not subjected with air or a nitrogen containing gas. In other words, the oxy-fuel burner is generally subjected with non-nitrogen containing gases.

Preferably, the fuel for the oxy-fuel burner is a hydrogen-containing fuel, preferably hydrogen or natural gas. Natural gas is preferably methane. Methane as the fuel has the advantage that the burner produces less $CO_2$ so that the ratio of $H_2O$ to $CO_2$ is higher which is beneficial for the gasification.

Accordingly, each burner for each hearth in the gasification zone can be an oxy-fuel burner.

The required $H_2O$ for the gasification as well as the required heat can be provided by at least one oxy-fuel burner.

The fuel for the oxy-fuel burner can be methane and the oxy-fuel burner is subjected with oxygen. The fuel for the oxy-fuel burner can be hydrogen and the oxy-fuel burner is subjected with oxygen.

The oxy-fuel burner can be subjected with oxygen. The oxy-fuel burner can be subjected with pure oxygen. Preferably the pure oxygen contains less nitrogen than atmospheric air. The oxy-fuel burner can be subjected with oxygen having a nitrogen content from 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the oxygen supplied to the oxy-fuel burner. It is desired that no nitrogen gas is subjected to the oxy-fuel burner.

The oxy-fuel burner can be subjected with oxygen having a $O_2$ content from 80 to 100 mol-% $O_2$, preferably 90 to 100 mol-% $O_2$, more preferably 95 to 100 mol-% $O_2$, and most preferably 99 to 100 mol-% $O_2$, based on the total number of moles of the oxygen supplied to the oxy-fuel burner. It is desired that no nitrogen gas is subjected to the oxy-fuel burner. The oxygen can contain 0 to 20 mol-% steam, preferably 1 to 10 mol-% steam, more preferably 1 to 5 mol-% steam, based on the total number of moles of the oxygen supplied to the oxy-fuel burner.

The oxy-fuel burner can be subjected with fuel having a nitrogen content from 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the fuel supplied to the oxy-fuel burner.

The gasification atmosphere in which the recovered carbon black is treated can be substantially free of $N_2$, more preferably free of $N_2$. The gasification atmosphere in which the recovered carbon black is treated can comprise 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the gasification atmosphere in which the recovered carbon black is treated.

During the gasification, the gasification zone in which the recovered carbon black is treated is preferably substantially free of $N_2$, more preferably free of $N_2$. During the gasification, the gasification zone in which the recovered carbon black is treated can comprise 0 to 2 mol-% $N_2$, preferably 0 to 1 mol-% $N_2$, more preferably 0.001 to 0.5 mol-% $N_2$, and most preferably 0.01 to 0.1 mol-% $N_2$, based on the total number of moles of the atmosphere in the gasification zone in which the recovered carbon black is treated.

The burner, such as oxy-fuel burner, can have a fuel flow rate from 1 to 2000 Nm$^3$/h, preferably 10 to 1500 Nm$^3$/h, more preferably 10 to 1000 Nm$^3$/h, and most preferably 10 to 600 Nm$^3$/h (Nm$^3$ is a volume at defined state: Pressure: 101325 Pa and temperature: 0°C).

However, it is preferred that the oxy-fuel burner can not only utilize oxygen ($O_2$), such as pure oxygen, (in addition to the fuel) but also optionally air. This means that the oxy-fuel burner can switch between air and oxygen (such as pure oxygen) operation. Accordingly, the oxy-fuel burner generally comprises means, such an air conduit, to supply air to the oxy-fuel burner. Accordingly, the oxy-fuel burner generally comprises means, such an air conduit, to supply air to the oxy-fuel burner in addition to means, such an oxygen conduit, to supply oxygen to the oxy-fuel burner. The air operation can reduce the concentration of $H_2O$ in the gasification zone if necessary, to slow down the rate of gasification if necessary. It is preferred that the oxy-fuel burner utilizes oxygen ($O_2$), such as pure oxygen, (in addition to the fuel) and optionally utilizes air. The oxy-fuel burner can be supplied with oxygen ($O_2$) as well as air. Instead of air, the oxy-fuel burner can be supplied with $N_2$ in addition to oxygen.

It is preferred that the oxy-fuel burner can continuously increase the supply with air in addition to oxygen in order to adjust the concentration of $N_2$ and $O_2$. Accordingly, the oxy-fuel burner can comprise an oxygen conduit and an air conduit and means to mix oxygen and air that is supplied to the oxy-fuel burner. The volume ratio of oxygen to air can be 1000 to 0.001, preferably 500 to 1, more preferably 200 to 10, and most preferably 100 to 20. It is preferred that the oxy-fuel burner can continuously increase the supply with nitrogen in addition to oxygen in order to adjust the concentration of $N_2$ and $O_2$. Accordingly, the oxy-fuel burner can comprise an oxygen conduit and an nitrogen conduit and means to mix oxygen and nitrogen that is supplied to the oxy-fuel burner. The molar ratio of oxygen to nitrogen can be 1000 to 0.001, preferably 500 to 1, more preferably 200 to 10, and most preferably 100 to 20.

Accordingly, after mixing oxygen with air, the resulting mixture can have a nitrogen content from 1 to 75 mol-% $N_2$, preferably 5 to 60 mol-% $N_2$, more preferably 10 to 40 mol-% $N_2$, and most preferably 15 to 30 mol-% $N_2$, based on the total number of moles of the resulting mixture supplied to the oxy-fuel burner. Accordingly, after mixing oxygen with air, the resulting mixture can have an oxygen content from 25 to 99 mol-% $O_2$, preferably 40 to 95 mol-% $O_2$, more preferably 60 to 90 mol-% $O_2$, and most preferably 70 to 85 mol-% $O_2$, based on the total number of moles of the resulting mixture supplied to the oxy-fuel burner. The oxy-fuel burner can be supplied with a gas comprising oxygen and nitrogen, wherein the oxygen content is between 25 to 99 mol-% $O_2$, preferably 40 to 95 mol-% $O_2$, more preferably 60 to 90 mol-% $O_2$, and most preferably 70 to 85 mol-% $O_2$, based on the total number of moles of the gas supplied to the oxy-fuel burner.

The gasification atmosphere in which the recovered carbon black is treated can comprise 1 to 75 mol-% $N_2$,

preferably 5 to 60 mol-% $N_2$, more preferably 10 to 40 mol-% $N_2$, and most preferably 15 to 30 mol-% $N_2$, based on the total number of moles of the gasification atmosphere in which the recovered carbon black is treated.

During the gasification, the gasification zone in which the recovered carbon black is treated can comprise 1 to 75 mol-% $N_2$, preferably 5 to 60 mol-% $N_2$, more preferably 10 to 40 mol-% $N_2$, and most preferably 15 to 30 mol-% $N_2$, based on the total number of moles of the atmosphere in the gasification zone in which the recovered carbon black is treated.

The recovered carbon black according to step (A) can be milled before subjecting to an aqueous flotation slurry. For instance, mechanical (impact) milling, jet milling, ultrasonic milling and/or electrical arc milling, preferably ultrasonic milling.

The particle size has an influence of the relative reduction of the carbon content in the treated carbon black as well as the total yield in the concentrate.

The particle size is not specifically limited and non-milled rCB can be utilized.

It is desired that at least 70 wt.-%, preferably at least 80 wt.-%, more preferably at least 90 wt.-%, most preferably at least 98 wt.-%, of the recovered carbon black has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the recovered carbon black has a particle size of more than 1 to 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the recovered carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve No. 7, having openings of 2800 $\mu$m. The sieves shall be 25 mm in height and 200 mm in diameter.

In the ASTM D 1511-12 (2017) norm, several sieves are used for the determination of the particle sizes. For instance, the expression "more than 2 to 2.8 mm" means that the mass of the particles present on Sieve No. 10 is in the desired wt.-% range. In other words, Sieve No. 10 has openings of 2000 $\mu$m (i.e. 2 mm) so that particles having a particle size of 2000 $\mu$m or less are not present on the sieve. Since Sieve No. 7 retains all particles having a particle size of more than 2.8 mm, the weight percentage of the particle fraction having a particle size of more than 2 to 2.8 mm can be easily determined.

The expression "x50" or "x(number)" means a percentile of an average distribution (alternatively the expression "D50" or "D(number) can be used). Accordingly, x50 = 100 $\mu$m means that 50% of the sample is smaller than the indicated value 100 $\mu$m.

The (i) volume average particle size x50 of the recovered carbon black can be from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or (ii) the volume average particle size x90 of the recovered carbon black can be from 50 to 400 $\mu$m preferably 80 to 350 $\mu$m, more preferably 110 to 300 $\mu$m, and most preferably 140 to 240 $\mu$m, wherein the volume average particle size is preferably measured as described in the specification by dry measurement using laser diffraction, and/or (iii) the volume average particle size x95 of the recovered carbon black can be from 80 to 300 $\mu$m preferably 100 to 350 $\mu$m, more preferably 120 to 300 $\mu$m, and most preferably 180 to 250 $\mu$m, wherein the volume average particle size is preferably measured as described in the specification by dry measurement using laser diffraction, and/or (iv) the volume average particle size x99 of the recovered carbon black can be from 100 to 250 $\mu$m preferably 130 to 240 $\mu$m, more preferably 160 to 230 $\mu$m, and most preferably 180 to 220 $\mu$m, wherein the volume average particle size is preferably measured as described in the specification by dry measurement using laser diffraction.

The (i) volume average particle size x50 of the recovered carbon black can be from 40 to 400 $\mu$m preferably 50 to 300 $\mu$m, more preferably 60 to 200 $\mu$m, and most preferably 80 to 200 $\mu$m, wherein the volume average particle size is preferably measured as described in the specification by dry measurement using laser diffraction, and/or (ii) the volume average particle size x90 of the recovered carbon black can be from 40 to 300 $\mu$m preferably 80 to 250 $\mu$m, more preferably 120 to 200 $\mu$m, and most preferably 150 to 190 $\mu$m, wherein the volume average particle size is preferably measured as described in the specification by dry measurement using laser diffraction, and/or (iii) the volume average particle size x95 of the recovered carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction, and/or (iv) the volume average particle size x99 of the recovered carbon black can be from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction.

The (i) volume average particle size x50 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (ii) the volume average particle size x90 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iii) the volume average particle size x95 of the recovered carbon black can be from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or (iv) the volume average particle size x99 of the recovered carbon black can be from 10 to 200 $\mu$m preferably 20 to 120 $\mu$m, more preferably 30 to 100 $\mu$m, and most preferably 50 to 70 $\mu$m, wherein the volume average particle size is preferably measured as described in the specification by dry measurement using laser diffraction.

The (i) volume average particle size x50 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (ii) the volume average particle size x90 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iii) the volume average particle size x95 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or (iv) the volume average particle size x99 of the recovered carbon black can be from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction.

The particle size distribution can be determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material is filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material are recorded. Before each measurement, a background measurement of 15 seconds is recorded to minimize noise. The obscuration range is controlled by the feeding rate with automatic adjustment and the hopper gap in the range of 5-15% using an integral factor of 0.2. The dispersing air pressure is set to 3 bar. Reported values (volume distribution) represent the average of three measurements after the data analysis using a standard analysis model in the instrument software.

The recovered carbon black can comprise 1 to 50 wt.-% coke, preferably 5 to 40 wt.-% coke, more preferably 6 to 35 wt.-% coke, and most preferably 10 to 30 wt.-% coke, based on the total weight of the recovered carbon black.

The recovered carbon black can have a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g.

The recovered carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The recovered carbon black can have (a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The recovered carbon black can have a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g.

The recovered carbon black can have a volatile content measured at 950°C of 0.5 to 20 wt.-%, such as 1 to 10 wt.-%, 1.5 to 10 wt.-%, 1 to 5 wt.-%, 2 to 10 wt.-%, 2 to 15 wt.-%, 2.5 to 10 wt.-%, 3 to 7 wt.-%, or 3.5 to 7 wt.-%. The volatile content can be measured as described in the specification.

It is desired that the recovered carbon black (i) has a transmittance of at least 20 %, preferably at least 30 %, more preferably at least 40 %, even more preferably at least 60 %, most preferably at least 80 % wherein the transmittance at 425 nm in toluene is measured according to ASTM D 1618-18 against toluene, and/or (ii) has a transmittance of at least 20 %, preferably at least 30 %, more preferably at least 40 %, even more preferably at least 60 %, most preferably at least 80 % wherein the transmittance at 355 nm in toluene is measured according to ASTM D 1618-18 against toluene, wherein the transmittance is measured at 355 nm instead of 425 nm, and/or (iii) has a transmittance of at least 20 %, preferably at least 30 %, more preferably at least 40 %, even more preferably at least 60 %, most preferably at least 80 % wherein the transmittance at 300 nm in toluene is measured according to ASTM D 1618-18 against toluene, wherein the transmittance is measured at 300 nm instead of 425 nm.

Usually, the recovered carbon black comprises ash, wherein ash comprise metal, metal compounds, silicon, oxygen, sulphur and/or silica, preferably metal comprises zinc, silicon, calcium, cobalt, manganese, potassium, aluminium, and/or iron. The aforementioned ash components are typically residues of a particulate carbon black-containing feedstock after the pyrolysis. Waste tires often comprise the aforementioned components as additives or catalysts. However, the aforementioned components negatively affect the properties of the recovered carbon black as well as the properties of a rubber articles, such as a tire, comprising said recovered carbon black. Accordingly, it is intended to lower the ash content by selectively removing the ash components. Particularly, it is desired to remove zinc or zinc compounds and/or silicon, such as silica.

The recovered carbon black can have an ash content in a range of from 5 to 30 wt.-%, preferably from 8 to 25 wt.-%, more preferably from 11 to 22 wt.-%, most preferably from 15 to 20 wt.-%, wherein the wt.-% is based on the total weight of the recovered carbon black and wherein the ash content is determined according to ASTM D 1506-15 at 550 °C, 16 h.

Generally, ash (or ash components) is embedded in the carbon black of the recovered carbon black, attached to the carbon black of the recovered carbon black, attached on the surface of the carbon black of the recovered carbon black, and/or associated in the carbon black of the recovered carbon black. Generally, ash (or ash components) is embedded in the carbon of the recovered carbon black, attached to the carbon of the recovered carbon black, attached on the surface of the carbon of the recovered carbon black, and/or associated in the carbon of the recovered carbon black.

The recovered carbon black can comprise zinc, preferably zinc oxide. The recovered carbon black can have a zinc content in a range of from 2.0 to 6.0 wt.-%, preferably from 2.5 to 5.5 wt.-%, more preferably from 3.0 to 5.0 wt.-%, most preferably from 3.5 to 4.5 wt.-%, wherein the zinc content is based on the total weight of the recovered carbon black and wherein the zinc content is preferably determined according to Inductively Coupled Plasma Optical Emission Spectrometry (ICP-OES), more preferably the zinc content is determined as described in the specification.

The analysis of the Zn content can be conducted following method A in ASTM D8371-20 using an ICP-OES (Spectro Arcos III) from SPECTRO Analytical Instruments GmbH (Germany) and a microwave (turboWAVE inert) from MLS Mikrowellen-Labor-Systeme GmbH (Germany). For the sample preparation, 0.3-0.4 g of the material was weighed into a microwave tube with a capacity of 15 cm$^3$ and wetted with 1 ml of pure water (<0.055 $\mu$S/cm). Afterward, 10 cm$^3$ of concentrated nitric acid ($\geq$65 %) was added to the tube and treated in the microwave. The sample was then measured with ICP-OES.

The recovered carbon black can have a silicon (Si) content in a range of from 1.0 to 5.0 wt.-%, preferably from 1.8 to 4.5 wt.-%, more preferably from 2.0 to 4.0 wt.-%, most preferably from 2.2 to 4.5 wt.-%, wherein the wt.-% is based on the total weight of the recovered carbon black and wherein the silicon content is preferably determined by to Inductively Coupled Plasma Optical Emission Spectrometry (ICP-OES), more preferably the silicon content is determined as described in the specification.

The analysis of the Si content was conducted using an ICP-OES (iCAP 6300) from Thermo Fisher (USA) and a microwave (turboWAVE inert) from MLS Mikrowellen-Labor-Systeme GmbH (Germany). For the analysis of the Si content method A in ASTM D8371-20 was followed. However, a combination of concentrated nitric acid ($\geq$65 %) and concentrated hydrofluoric acid (~ 49%) (usually in a volume ratio of 1:1) with microwave treatment was used to completely digest the sample with microwave treatment. The digested sample is diluted with distilled water to a suitable concentration. The sample was measured with ICP-OES, whereby the device is equipped with a sample introduction kit suitable for HF. In ICP-OES, silicon can be measured with two wavelengths of 288.158 nm and 251.611 nm, preferably measured at 288.158 nm. A standard, such as a commercial standard solution (1,000 g/L Si in nitric acid (1 mol/L) with 2wt.-% HF commercially available from Bernd kraft GmbH (Germany) is measured for calibration. For the measurement of a rubber containing material, the ash obtained according to ASTM D 1506-15 at 550 °C, 16 h is used for the analysis of the Si content.

Silica (or silicon in form of silica) can be embedded in the carbon black of the recovered carbon black, attached to the carbon black of the recovered carbon black, attached on the surface of the carbon black of the recovered carbon black, and/or associated in the carbon black of the recovered carbon black. Silica (or silicon in form of silica) can be embedded in the carbon of the recovered carbon black, attached to the carbon of the recovered carbon black, attached on the surface of the carbon of the recovered carbon black, and/or associated in the carbon of the recovered carbon black.

The recovered carbon black can have an oxygen content in a range of from 1.0 to 3.0 wt.-%, preferably from 1.5 to 3.0 wt.-%, more preferably from 1.5 to 2.5 wt.-%, wherein the wt.-% is based on the total weight of the recovered carbon black and wherein the oxygen content is determined by elemental analysis as described in the specification.

The recovered carbon black can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the recovered carbon black and wherein the sulfur content is determined by elemental analysis as described in the specification.

The recovered carbon black can (i) comprise at least 50 wt.-% carbon black, preferably at least 60 wt.-% carbon black, more preferably at least 70 wt.-% carbon black, even more preferably at least 80 wt.-% carbon black, and most preferably at least 90 wt.-% carbon black, based on the total weight of the recovered carbon black, and/or can (ii) comprise 50 to 95 wt.-% carbon black, preferably 50 to 90 wt.-% carbon black, more preferably 65 to 87 wt.-% carbon black, more preferably 70 to 85 wt.-% carbon black, and most preferably 75 to 80 wt.-% carbon black, based on the total weight of the recovered carbon black.

The recovered carbon black can have a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification.

The aqueous flotation slurry can comprise a frother, preferably the frother comprises aliphatic monohydric alcohols, polyglycol ethers and/or polyglycols.

The frother can comprise methyl isobutyl carbinol, cresylic acid, tiethoxybutane, and/or pine oil.

The frother can be present in the aqueous flotation slurry in an amount of 0.01 to 1 mL per 100 g of recovered carbon black, preferably 0.05 to 0.9 mL per 100 g of recovered carbon black, more preferably 0.1 to 0.8 mL per 100 g of recovered carbon black, even more preferably 0.2 to 0.7 mL per 100 g of recovered carbon black, and most preferably even more preferably 0.3 to 0.6 mL per 100 g of recovered carbon black. The frother can be present in the aqueous flotation slurry in an amount of 0.01 to 1 mL per 100 mL water, preferably 0.05 to 0.9 mL per 100 mL water, more preferably 0.1 to 0.8 mL per 100 mL water, even more preferably 0.2 to 0.7 mL per 100 mL water, and most preferably even more preferably 0.3 to 0.6 mL per 100 mL water.

The frother can be present in the aqueous flotation slurry in an amount of 1 to 1000 $\mu$L per L water, preferably 10 to 500 $\mu$L per L water, more preferably 20 to 300 $\mu$L per L water, even more preferably 30 to 250 $\mu$L per L water, and most preferably even more preferably 40 to 150 $\mu$L per L water.

The concentration of recovered carbon black in the aqueous flotation slurry can be 1 to 100 g/L, preferably 8 to 80 g/L, more preferably 10 to 60 g/L, even more preferably 12 to 40 g/L, and most preferably 14 to 30 g/L. A high concentration of rCB in the aqueous flotation slurry result in a higher yield of treated carbon black.

The aqueous flotation slurry can comprise a collector. However, a collector is not necessary but particularly preferred. The collector can be a non-ionic collector and/or an ionic collector. The ionic collector can be an anionic collector, amphoteric collector and/or cationic collector.

An anionic collector can be a sulfhydryl collector and/or a oxhydryl collector. Sulfhydryl collectors can be xanthates, dithiophosphates and/or dithiocarbamates. Oxhydryl collectors can be carboxylates, sulfates and/or sulfonates. Non-ionic collectors can be aliphatic collectors, such as hexadecane (HEX), petroleum, and/or kerosene. Furthermore, phenols (phenol collector) can be used as collectors such as 4-dodecylphenol (DDP). A cationic collector can be an amine or amine ether.

The collector can comprise 4-dodecylphenol and another collector, such as hexadecane, in a ratio of 2/1 to 1/2.

The collector can be present in the aqueous flotation slurry in an amount of 0.05 to 2 mL per 100 g of recovered carbon black, preferably 0.1 to 1.5 mL per 100 g of recovered carbon black, more preferably 0.2 to 1.0 mL per 100 g of recovered carbon black, even more preferably 0.3 to 0.6 mL per 100 g of recovered carbon black, and most preferably even more preferably 0.35 to 0.45 mL per 100 g of recovered carbon black. A high concentration of the collector has a beneficial effect of the total yield of treated carbon black in the concentrate.

The aqueous flotation slurry can comprise an activator, such as sulfates, such as $CuSO_4$. Preferably the aqueous flotation slurry comprises $CuSO_4$ and xanthate.

The concentrate comprising the treated carbon black can be the treated carbon black. For instance, the concentrate comprising the treated carbon black can be dried and the said treated carbon black can be used.

The concentrate of step (D) can be filtered to obtain wet treated carbon black and the wet treated carbon black is pelletized (or wet beading). The wet pelletizing (b) comprises generally the following steps: beading the wet treated carbon black to obtain beaded treated carbon black comprising water, and drying the beaded treated carbon black to obtain wet beaded treated carbon black.

Wet pelletizing (wet beading) is usually carried out in a "wet beading box" equipped with a multiplicity of agitator pins secured to a shaft extending longitudinally through the body and rotating a speed up to about 650 rpm depending on the type of carbon black to be treated. The action of the pins causes the moist carbon black to form into beads or pellets which are subsequently dried in a dryer. However, every type of wet beading apparatus may be used for the wet beading.

The weight of water used for the beading is usually equal to the weight of the treated carbon black to be beaded. The range can be 5 wt.-% to 1000 wt.-%, based on the total dry weight of the treated carbon black. Preferably 20 to 200 wt.-%, more preferably 50 to 150 wt.-%, based on the total dry weight of the treated carbon black.

The water for the wet beading usually comprises a binder, preferably the binder comprises molasse, and/or lignosulfonates. Such binders are uniformly dispersed through the beads. A binder can increase the crushing strength and packing point of carbon black beads. The binder can be present in an amount of 0.01 to 1.00 wt.-%, preferably 0.05 to 0.9 wt.-%, more preferably 0.1 to 0.80 wt.-%, based on the total dry weight of the treated carbon black, particularly the treated carbon black for the wet beading. The weight ratio of the binder to the treated carbon black for the wet beading is from 1/10000 to 1/100, preferably 1 to 1/2000 to 1/110, more preferably 1/1000 to 1/125.

The pellet size (or beads size) of the wet beaded treated carbon black can be 10 mm or less, preferably 5 mm or less, more preferably 3 mm or less.

The flotation tailings can be recycled into the aqueous flotation slurry of step (B). Accordingly, a continuous process can be obtained and the total yield of the treated carbon black is increased.

The concentrate of step (D) can be filtered, and optionally dried, to obtain the treated carbon black. Alternatively, the concentrate of step (D) can be used as treated carbon black, for instance, in a rubber article.

The flotation tailings comprise hydrophilic components, preferably comprising ash, preferably ash comprises silica.

The treated carbon black can have a coke content below 15 wt.-%, preferably below 10 wt.-%, more preferably below 5 wt.-%, and most preferably below 1 wt.-%, based on the total weight of the treated carbon black.

The treated carbon black of step (C) can comprise 65 to 100 wt.-% carbon, preferably 70 to 99 wt.-%, more preferably 80 to 95 wt.-%, even more preferably 82 to 90 wt.-%, and most preferably 85 to 88 wt.-%, based on the total weight of the carbon black of step (A), as measured as described in the specification.

The carbon content of the treated carbon black of step (C) can be higher than the carbon content of the recovered carbon black of step (A), and/or wherein the carbon content of the treated carbon black of step (C) can be more than 5 wt.-%, preferably more than 8 wt.-%, more preferably more than 10 wt.-%, even more preferably more than 15 wt.-%, and most preferably more than 20 wt.-%, higher compared to the carbon content of the carbon black of step (A), wherein the carbon content is determined by elemental analysis as described in the specification.

The treated carbon black can have a C (carbon) content of at least 60 wt.-%, preferably at least 63 wt.-%, more preferably 65 to 90 wt.-%, even more preferably 70 wt.-% to 88 wt.-%, and most preferably 75 to 87 wt.-%, wherein the wt.-% is based on the total weight of the treated carbon black and wherein the carbon content is determined by elemental analysis as described in the specification.

The treated carbon black can have a C (carbon) content of at least 3 wt.-% more than C (carbon) content of the recovered carbon black used in step (A), preferably at least 4 wt.-% more than C (carbon) content of the recovered carbon black used in step (A), more preferably at least 5 wt.-% more than C (carbon) content of the recovered carbon black used in step (A), even more preferably at least 6 wt.-% more than C (carbon) content of the recovered carbon black used in step (A) and most preferably at least 8 wt.-% more than C (carbon) content of the recovered carbon black used in step (A), wherein the carbon content is determined by elemental analysis as described in the specification.

The treated carbon black can have an ash content in a range of from 1 to 25 wt.-%, preferably from 2 to 20 wt.-%, more preferably from 5 to 18 wt.-%, most preferably from 10 to 15 wt.-%, wherein the wt.-% is based on the total weight of the treated carbon black and wherein the ash content is determined according to ASTM D 1506-15 at 550 °C, 16 h. It is desired that the ash content of the treated carbon black is lower than the ash content of the recovered carbon black.

The treated carbon black can have an ash content of at least 3 wt.-% less than ash content of the recovered carbon black used in step (A), preferably at least 4 wt.-% less than ash content of the recovered carbon black used in step (A), more preferably at least 5 wt.-% less than ash content of the recovered carbon black used in step (A), even more preferably at least 6 wt.-% less than ash content of the recovered carbon black used in step (A)and most preferably at least 8 wt.-% less than ash content of the recovered carbon black used in step (A), wherein the ash content is determined according to ASTM D 1506-15 at 550 °C, 16 h.

It is desired that the treated carbon black has a lower ash content compared to the ash content of the recovered carbon black used in step (A) and wherein the ash content is determined according to ASTM D 1506-15 at 550 °C, 16 h.

The treated carbon black can comprise ash, wherein ash comprise metal, metal compounds, silicon, oxygen, sulphur and/or silica, preferably metal comprises zinc, silicon, calcium, cobalt, manganese, potassium, aluminium, and/or iron.

The treated carbon black can have an iodine adsorption number of 30 to 80 mg/g, preferably 40 to 70 mg/g, more preferably 45 to 65 mg/g, the iodine adsorption number is measured according to ASTM D1510-17.

The treated carbon black can have a statistical thickness surface area (STSA) determined according to ASTM D6556-17 in a range from 15 to 500 m$^2$/g, preferably from 20 to 400 m$^2$/g, more preferably from 30 to 300 m$^2$/g, even more preferably from 40 to 200 m$^2$/g, most preferably from 50 to 150 m$^2$/g.

The treated carbon black can have a BET surface area determined according to ASTM D6556-17 in a range from 15 to 500 m$^2$/g, preferably from 30 to 300 m$^2$/g, more preferably from 40 to 250 m$^2$/g, even more preferably from 50 to 200 m$^2$/g, most preferably from 60 to 150 m$^2$/g.

The treated carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The obtained treated carbon black can have

(a) a BET surface area determined according to ASTM D6556-17 in a range from 40 to 100 $m^2/g$, preferably from 50 to 80 $m^2/g$, more preferably 55 to 70 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 $m^2/g$, preferably from 20 to 90 $m^2/g$, more preferably 25 to 80 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 $m^2/g$, preferably from 250 to 500 $m^2/g$, more preferably 300 to 450 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The treated carbon black can have a volatile content measured at 950°C of 0.01 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%. The volatile content can be measured as described in the specification.

The treated carbon black (i) can have a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or (ii) can have a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or (iii) can have a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

At least 70 wt.-%, preferably at least 80 wt.-%, more preferably at least 90 wt.-%, most preferably at least 98 wt.-%, of the treated carbon black can have a particle size of more than 2 mm, wherein the particle size is measured according to ASTM D 1511-12 (2017).

At least 50 wt.-%, preferably at least 60 wt.-%, more preferably at least 70 wt.-%, most preferably at least 80 wt.-%, of the treated carbon black can have a particle size of more than 1 to 2 mm, wherein the particle size is measured according to ASTM D 1511-12 (2017).

At least 50 wt.-%, preferably at least 60 wt.-%, more preferably at least 70 wt.-%, most preferably at least 80 wt.-%, of the treated carbon black, preferably before milling, can have a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

The (i) volume average particle size x50 of the treated carbon black can be from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or (ii) the volume average particle size x90 of the treated carbon black can be from 50 to 400 $\mu$m preferably 80 to 350 $\mu$m, more preferably 110 to 300 $\mu$m, and most preferably 140 to 240 $\mu$m, wherein the volume average particle size is preferably measured as described in the specification by dry measurement using laser diffraction, and/or (iii) the volume average particle size x95 of the treated carbon black can be from 80 to 300 $\mu$m preferably 100 to 350 $\mu$m, more preferably 120 to 300 $\mu$m, and most preferably 180 to 250 $\mu$m, wherein the volume average particle size is preferably measured as described in the specification by dry measurement using laser diffraction, and/or (iv) the volume average particle size x99 of the treated carbon black can be from 100 to 250 $\mu$m preferably 130 to 240 $\mu$m, more preferably 160 to 230 $\mu$m, and most preferably 180 to 220 $\mu$m, wherein the volume average particle size is preferably measured as described in the specification by dry measurement using laser diffraction.

The (i) volume average particle size x50 of the treated carbon black can be from 40 to 400 $\mu$m preferably 50 to 300 $\mu$m, more preferably 60 to 200 $\mu$m, and most preferably 80 to 200 $\mu$m, wherein the volume average particle size is preferably measured as described in the specification by dry measurement using laser diffraction, and/or (ii) the volume average particle size x90 of the treated carbon black can be from 40 to 300 $\mu$m preferably 80 to 250 $\mu$m, more preferably

120 to 200 μm, and most preferably 150 to 190 μm, wherein the volume average particle size is preferably measured as described in the specification by dry measurement using laser diffraction, and/or (iii) the volume average particle size x95 of the treated carbon black can be from 70 to 250 μm preferably 80 to 200 μm, more preferably 90 to 190 μm, and most preferably 90 to 180 μm, wherein the volume average particle size is preferably measured as described in the specification by dry measurement using laser diffraction, and/or (iv) the volume average particle size x99 of the treated carbon black can be from 70 to 250 μm preferably 80 to 200 μm, more preferably 90 to 190 μm, and most preferably 90 to 180 μm, wherein the volume average particle size is preferably measured as described in the specification by dry measurement using laser diffraction.

The (i) volume average particle size x50 of the treated carbon black can be from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or (ii) the volume average particle size x90 of the treated carbon black can be from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or (iii) the volume average particle size x95 of the treated carbon black can be from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or (iv) the volume average particle size x99 of the treated carbon black can be from 10 to 200 μm preferably 20 to 120 μm, more preferably 30 to 100 μm, and most preferably 50 to 70 μm, wherein the volume average particle size is preferably measured as described in the specification by dry measurement using laser diffraction.

The (i) volume average particle size x50 of the treated carbon black can be from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or (ii) the volume average particle size x90 of the treated carbon black can be from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or (iii) the volume average particle size x95 of the treated carbon black can be from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or (iv) the volume average particle size x99 of the treated carbon black can be from 0.1 to 50 μm preferably 1 to 40 μm, more preferably 2 to 30 μm, and most preferably 3 to 20 μm, wherein the volume average particle size is preferably measured as described in the specification by dry measurement using laser diffraction.

The treated carbon black can be milled, preferably wet milled.

The volume average particle size x50 of the treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x90 of the treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x95 of the treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x99 of the treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The process can further comprise the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a pyrolysis carbon black-containing particulate is obtained. The particulate carbon black-containing feedstock can be a rubber granulate comprising carbon black.

Furthermore, a mixture of carbon black obtained according to the invention and virgin carbon black is provided, preferably 10 to 20 wt.-% of carbon black obtained according to the invention and 80 to 90 wt.-% of virgin carbon black, based on the total weight of the mixture, more preferably the wt.-% of the carbon black obtained according to the invention and virgin carbon black sum up to 100 wt.-%.

Furthermore, a rubber article comprising carbon black comprising coke, preferably a treated carbon black produced according to the present invention, is provided, wherein the rubber article has an abrasion of less than 120 mm$^3$, measured at 23 °C DIN ISO 4649:2014-03, 10 N. Furthermore, a rubber article comprising carbon black comprising ash, preferably a treated carbon black produced according to the present invention, is provided, wherein the rubber article has an abrasion of less than 120 mm$^3$, measured at 23 °C DIN ISO 4649:2014-03, 10 N. Generally, the performance of recovered carbon black is poor in terms of the abrasion of a rubber article. However, the present invention provides a method in which recovered carbon black is treated so that the obtained treated carbon black can be used in rubber articles that has improved abrasion properties.

The rubber article can have an abrasion of less than 110 mm$^3$, preferably less than 106 mm$^3$, more preferably 50 to 105 mm$^3$, and most preferably 90 to 105 mm$^3$, as measured at 23 °C DIN ISO 4649:2014-03, 10 N.

The carbon black present in the rubber article is preferably a treated carbon black obtained according to the present invention.

The rubber article can have a tensile strength of 21.5 to 30.0 Mpa, preferably 22.0 to 28 Mpa, as measured according to ISO 37 - 2012, S2.

The rubber article can have a topography relative peak area of less than 10 %, preferably less than 5 %, more preferably less than 2 %, and most preferably less than 1 %, wherein the topography relative peak area is measured as described in the specification.

The rubber article can have an elongation at break of more than 520 %, preferably 530 to 700 %, more preferably 550 to 700 %, even more preferably 600 to 700 %, and most preferably 615 to 700 %, as measured according to ISO 37 - 2012, S2.

The rubber article can have a Mooney viscosity of less than 65 Me, more preferably 30 to 64 Me, even more preferably 40 to 63 Me, and most preferably 50 to 61 Me, as measured according to ISO 289-1:2015.

The rubber article can have (A) a peak count of 5 to 10 $\mu$m is less than 300, preferably less than 200, more preferably less than 100, and most preferably less than 50, wherein the topography relative peak area is measured as described in the specification, and/or (B) a peak count of 5 to 10 $\mu$m is less than 6, preferably less than 5, more preferably less than 4, and most preferably less than 3, wherein the topography relative peak area is measured as described in the specification, and/or (C) a peak count of 10 to 15 $\mu$m is less than 1.5, and most preferably less than 1, wherein the topography relative peak area is measured as described in the specification.

The invention will now be described with reference to the accompanying figures (FIGs) which do not limit the scope and ambit of the invention. The description provided is purely by way of example and illustration. However, specific features exemplified in the figures can be used to further restrict the scope of the invention and claims.

Figures 1 to 3 (FIG. 1 to 3) are images of particles of recovered carbon black 1 used in the examples.

Figure 1 (FIG. 1) is an image of a particle (100) of the recovered carbon black 1. The figure shows ash components associated in the carbon of the rCB (such as embedded in the carbon of the rCB, attached to the carbon of the rCB, and/or attached on the surface of the carbon of the rCB). The particle mostly comprises of a carbon surface (101). The dashed zone (102) comprises silicates associated in the rCB particle. The dashed zone (103) comprises zinc associated in the rCB particle. The dark areas indicated with the number 104 are further silicate parts associated in the rCB particle.

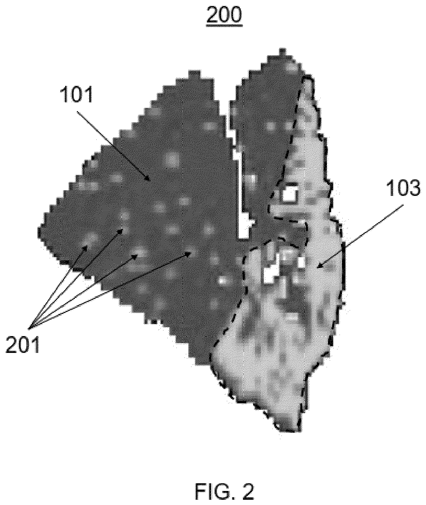

Figure 2 (FIG. 2) is a further image of a particle (200) of the recovered carbon black 1. Said particle does not comprise silicates. However, the dashed zone (103) comprises zinc associated in the rCB particle. The bright areas indicated with the number 201 are further silicate parts associated in the rCB particle.

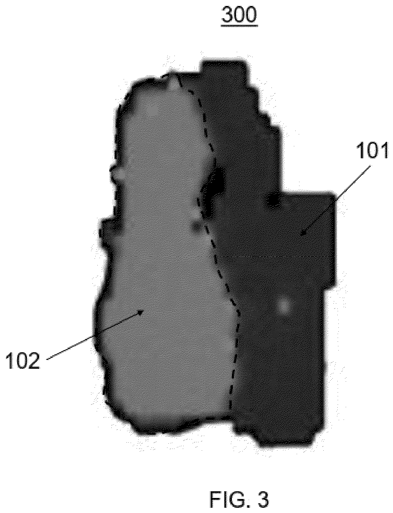

Figure 3 (FIG. 3) is a further image of a particle (300) of the recovered carbon black 1. Said particle does not comprise zinc. However, the dashed zone (102) comprises silica associated in the rCB particle.

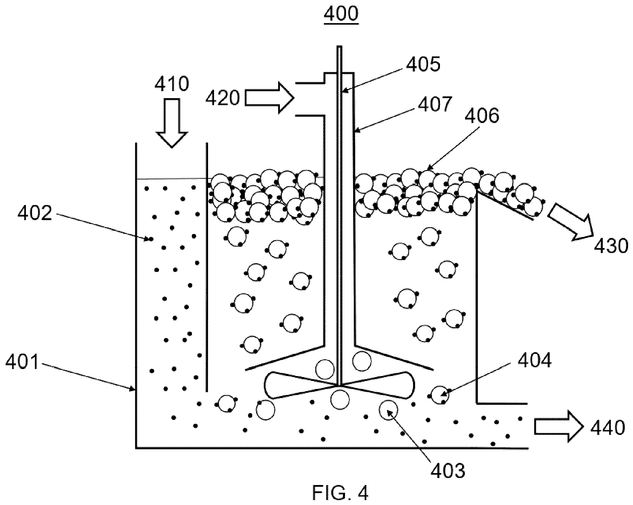

Figure 4 (FIG. 4) reveals a froth flotation device (400) for the treatment of recovered carbon black. The froth flotation device (400) comprises a flotation chamber (401), an agitation unit (407), an inlet for an aqueous flotation slurry (410) and an outlet for flotation tailings (440).

An aqueous flotation slurry (410) comprising recovered carbon black (402), a collector and a frother is subjected into the flotation chamber (401) of the froth flotation device (400).

The agitation unit (407) comprises a rotor (405) and an inlet for a flotation gas (420). The flotation gas (420) is subjected through the agitation unit (407) into the aqueous flotation slurry (410) to form bubbles (403). The size of the bubbles (403) can be adjusted by the rotational speed of the rotor (405), the quantity of the flotation gas (420) and the surface tension of the aqueous flotation slurry (410).

As mentioned above, recovered carbon black comprises particles that comprises hydrophilic ash components such as silica associated in the rCB. Accordingly, a part of the rCB has a higher hydrophilic character compared to recovered carbon black that consists substantially of carbon. The collector makes the recovered carbon black hydrophobic (water repellent) and allows it to attached to air bubbles (404).

In the froth collecting zone (406), the concentrate comprising the treated carbon black (430) can be collected. The flotation tailings (440) can be discharged at the bottom of the flotation chamber (401). The concentrate comprising the treated carbon black (430) can be dried to obtained dried treated carbon black. Alternatively, the concentrate comprising the treated carbon black (430) that is still wet can be wet milled and/or wet beaded.

The froth flotation device (400) of FIG. 4 is used for a continues process. However, the flotation can also be carried out batch-wise or using different flotation devices.

Furthermore, the invention is not limited to froth flotation. In addition, the present invention will be described by means of the following aspects.

**EP 4 582 188 A1**

1. A method for the treatment of recovered carbon black comprising, (A) providing recovered carbon black and gasification of the recovered carbon black at a temperature of 730 °C to 950 °C, (B) subjecting the recovered carbon black of step (A) after the gasification to an aqueous flotation slurry, (C) treating the recovered carbon black in the aqueous flotation slurry by flotation, (D) separating the concentrate comprising the treated carbon black and the flotation tailings.

2. The method according to aspect 1, wherein the flotation is a froth flotation.

3. The method according to any one of the preceding aspects 1 or 2, wherein the gasification is carried out for 1 min to 10 h, preferably 10 min to 5 h, more preferably 20 min to 3 h, and most preferably 30 min to 2 h.

4. The method according to any one of the preceding aspects, wherein the gasification is carried out at a temperature of 730 °C to 910 °C, preferably 730 °C to 900 °C, more preferably 740 to 890 °C, even more preferably 740 °C to 860 °C, and most preferably 790 to 850 °C.

5. The method according to any one of the preceding aspects, wherein the gasification is carried out by using $H_2O$ and/or $CO_2$, preferably $H_2O$.

6. The method according to any one of the preceding aspects, wherein the gasification is carried out by subjecting the recovered carbon black with a gas comprising $H_2O$ and/or $CO_2$, preferably $H_2O$.

7. The method according to any one of the preceding aspects, wherein the gasification is carried out by subjecting the recovered carbon black with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

8. The method according to any one of the preceding aspects, wherein the gasification atmosphere in which the recovered carbon black is treated comprises 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the recovered carbon black is treated.

9. The method according to any one of the preceding aspects, wherein the $H_2O$ for the gasification as well as the required heat is provided by at least one hydrogen burner and/or at least one oxy-fuel burner.

10. The method according to any one of the preceding aspects, wherein the gasification is carried out in a fluidized bed reactor, auger reactor, batch reactor, fixed bed reactor, electric furnace, multiple hearth furnace and/or rotary kiln.

11. The method according to any one of the preceding aspects, wherein the process further comprises the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a pyrolysis carbon black-containing particulate is obtained.

12. The method according to any one of the preceding aspects, wherein the recovered carbon black is derived from the pyrolysis of rubber granulate, plastic granulate, and/or biomass-based granulate, preferably rubber granulate.

13. The method according to any one of the preceding aspects, wherein recovered carbon black is derived from the pyrolysis of a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler

14. The method according to any one of the preceding aspects, wherein recovered carbon black is derived from the pyrolysis of a cable sheath, a tube, a drive belt, a conveyor belt, a roll covering, a shoe sole, a hose, a sealing member, a profile, a damping element, a coating or a colored or printed article.

15. The method according to any one of the preceding aspects, wherein the recovered carbon black according to step (A) is milled before subjecting to an aqueous flotation slurry.

16. The method according to any one of the preceding aspects, wherein at least 70 wt.-%, preferably at least 80 wt.-%, more preferably at least 90 wt.-%, most preferably at least 98 wt.-%, of the recovered carbon black has a particle size of more than 2 mm, wherein the particle size is measured according to ASTM D 1511-12 (2017).

17. The method according to any one of the preceding aspects, wherein at least 50 wt.-%, preferably at least 60 wt.-%, more preferably at least 70 wt.-%, most preferably at least 80 wt.-%, of the recovered carbon black has a particle size of more than 1 to 2 mm, wherein the particle size is measured according to ASTM D 1511-12 (2017).

18. The method according to any one of the preceding aspects, wherein at least 50 wt.-%, preferably at least 60 wt.-%, more preferably at least 70 wt.-%, most preferably at least 80 wt.-%, of the recovered carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

19. The method according to any one of the preceding aspects, wherein

(i) the volume average particle size x50 of the recovered carbon black is from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or

(ii) the volume average particle size x90 of the recovered carbon black is from 50 to 400 μm preferably 80 to 350 μm, more preferably 110 to 300 μm, and most preferably 140 to 240 μm, wherein the volume average particle size is preferably measured as described in the specification by dry measurement using laser diffraction, and/or
(iii) the volume average particle size x95 of the recovered carbon black is from 80 to 300 μm preferably 100 to 350 μm, more preferably 120 to 300 μm, and most preferably 180 to 250 μm, wherein the volume average particle size is preferably measured as described in the specification by dry measurement using laser diffraction, and/or
(iv) the volume average particle size x99 of the recovered carbon black is from 100 to 250 μm preferably 130 to 240 μm, more preferably 160 to 230 μm, and most preferably 180 to 220 μm, wherein the volume average particle size is preferably measured as described in the specification by dry measurement using laser diffraction.

20. The method according to any one of the preceding aspects, wherein

(i) the volume average particle size x50 of the recovered carbon black is from 40 to 400 μm preferably 50 to 300 μm, more preferably 60 to 200 μm, and most preferably 80 to 200 μm, wherein the volume average particle size is preferably measured as described in the specification by dry measurement using laser diffraction, and/or
(ii) the volume average particle size x90 of the recovered carbon black is from 40 to 300 μm preferably 80 to 250 μm, more preferably 120 to 200 μm, and most preferably 150 to 190 μm, wherein the volume average particle size is preferably measured as described in the specification by dry measurement using laser diffraction, and/or
(iii) the volume average particle size x95 of the recovered carbon black is from 70 to 250 μm preferably 80 to 200 μm, more preferably 90 to 190 μm, and most preferably 90 to 180 μm, wherein the volume average particle size is preferably measured as described in the specification by dry measurement using laser diffraction, and/or
(iv) the volume average particle size x99 of the recovered carbon black is from 70 to 250 μm preferably 80 to 200 μm, more preferably 90 to 190 μm, and most preferably 90 to 180 μm, wherein the volume average particle size is preferably measured as described in the specification by dry measurement using laser diffraction.

21 The method according to any one of the preceding aspects, wherein

(i) the volume average particle size x50 of the recovered carbon black is from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or
(ii) the volume average particle size x90 of the recovered carbon black is from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or
(iii) the volume average particle size x95 of the recovered carbon black is from 10 to 200 μm preferably 20 to 120 μm, more preferably 30 to 100 μm, and most preferably 40 to 80 μm, wherein the volume average particle size is preferably measured as described in the specification by dry measurement using laser diffraction, and/or
(iv) the volume average particle size x99 of the recovered carbon black is from 10 to 200 μm preferably 20 to 120 μm, more preferably 30 to 100 μm, and most preferably 50 to 70 μm, wherein the volume average particle size is preferably measured as described in the specification by dry measurement using laser diffraction.

22. The method according to any one of the preceding aspects, wherein

(i) the volume average particle size x50 of the recovered carbon black is from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or
(ii) the volume average particle size x90 of the recovered carbon black is from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or
(iii) the volume average particle size x95 of the recovered carbon black is from 0.1 to 50 μm preferably 1 to 40 μm, more preferably 2 to 30 μm, and most preferably 3 to 20 μm, wherein the volume average particle size is preferably measured as described in the specification by dry measurement using laser diffraction, and/or
(iv) the volume average particle size x99 of the recovered carbon black is from 0.1 to 50 μm preferably 1 to 40 μm, more preferably 2 to 30 μm, and most preferably 3 to 20 μm, wherein the volume average particle size is preferably measured as described in the specification by dry measurement using laser diffraction.

23. The method according to any one of the preceding aspects, wherein the recovered carbon black comprises 1 to 50 wt.-% coke, preferably 5 to 40 wt.-% coke, more preferably 6 to 35 wt.-% coke, and most preferably 10 to 30 wt.-% coke, based on the total weight of the recovered carbon black.

24. The method according to any one of the preceding aspects, wherein the recovered carbon black has a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g.

25. The method according to any one of the preceding aspects, wherein the recovered carbon black has a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

26. The method according to any one of the preceding aspects, wherein the recovered carbon black has

(a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

27. The method according to any one of the preceding aspects, wherein the recovered carbon black has a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g.

28. The method according to any one of the preceding aspects, wherein the recovered carbon black has a volatile content measured at 950°C of 0.5 to 20 wt.-%, such as 1 to 10 wt.-%, 1.5 to 10 wt.-%, 1 to 5 wt.-%, 2 to 10 wt.-%, 2 to 15 wt.-%, 2.5 to 10 wt.-%, 3 to 7 wt.-%, or 3.5 to 7 wt.-%.

29. The method according to any one of the preceding aspects, wherein the recovered carbon black

(i) has a transmittance of at least 20 %, preferably at least 30 %, more preferably at least 40 %, even more preferably at least 60 %, most preferably at least 80 % wherein the transmittance at 425 nm in toluene is measured according to ASTM D 1618-18 against toluene, and/or

(ii) has a transmittance of at least 20 %, preferably at least 30 %, more preferably at least 40 %, even more preferably at least 60 %, most preferably at least 80 % wherein the transmittance at 355 nm in toluene is measured according to ASTM D 1618-18 against toluene, wherein the transmittance is measured at 355 nm instead of 425 nm, and/or

(iii) has a transmittance of at least 20 %, preferably at least 30 %, more preferably at least 40 %, even more preferably at least 60 %, most preferably at least 80 % wherein the transmittance at 300 nm in toluene is measured according to ASTM D 1618-18 against toluene, wherein the transmittance is measured at 300 nm instead of 425 nm.

30. The method according to any one of the preceding aspects, wherein recovered carbon black comprises zinc, preferably zinc oxide.

31. The method according to any one of the preceding aspects, wherein the recovered carbon black has a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of the recovered carbon black and wherein the zinc content is preferably determined according to Inductively Coupled Plasma Optical Emission Spectrometry (ICP-OES), more preferably the zinc content is determined as described in the specification.

32. The method according to any one of the preceding aspects, wherein the recovered carbon black has a silicon (Si)

18

content in a range of from 1.5 to 10.0 wt.-%, preferably from 1.8 to 6.0 wt.-%, more preferably from 2.0 to 5.0 wt.-%, most preferably from 2.2 to 4.5 wt.-%, wherein the wt.-% is based on the total weight of the recovered carbon black and wherein the silicon content is preferably determined by to Inductively Coupled Plasma Optical Emission Spectrometry (ICP-OES), more preferably the silicon content is determined as described in the specification.

33. The method according to any one of the preceding aspects, wherein silica (or silicon in form of silica) is embedded in the carbon of the recovered carbon black, attached to the carbon of the recovered carbon black, attached on the surface of the carbon of the recovered carbon black, and/or associated in the carbon of the recovered carbon black.

34. The method according to any one of the preceding aspects, wherein the recovered carbon black comprises ash, wherein ash comprise metal, metal compounds, silicon, oxygen, sulphur and/or silica, preferably metal comprises zinc, silicon, calcium, cobalt, manganese, potassium, aluminium, and/or iron.

35. The method according to any one of the preceding aspects, wherein the recovered carbon black has an ash content in a range of from 5 to 30 wt.-%, preferably from 8 to 25 wt.-%, more preferably from 11 to 22 wt.-%, most preferably from 15 to 20 wt.-%, wherein the wt.-% is based on the total weight of the recovered carbon black and wherein the ash content is determined according to ASTM D 1506-15 at 550 °C, 16 h.

36. The method according to any one of the preceding aspects, wherein ash is embedded in the carbon black of the recovered carbon black, attached to the carbon of the recovered carbon black, attached on the surface of the carbon of the recovered carbon black, and/or associated in the carbon of the recovered carbon black.

37. The method according to any one of the preceding aspects, wherein the recovered carbon black has an oxygen content in a range of from 1.0 to 3.0 wt.-%, preferably from 1.5 to 3.0 wt.-%, more preferably from 1.5 to 2.5 wt.-%, wherein the wt.-% is based on the total weight of the recovered carbon black and wherein the oxygen content is determined by elemental analysis as described in the specification.

38. The method according to any one of the preceding aspects, wherein the recovered carbon black has a sulfur content in a range of from 1.0 to 4.0 wt.-%, preferably from 2.0 to 4.0 wt.-%, more preferably from 2.0 to 3.0 wt.-%, wherein the wt.-% is based on the total weight of the recovered carbon black and wherein the sulfur content is determined by elemental analysis as described in the specification.

39. The method according to any one of the preceding aspects, wherein the recovered carbon black:

(i) comprises at least 50 wt.-% carbon black, preferably at least 60 wt.-% carbon black, more preferably at least 70 wt.-% carbon black, even more preferably at least 80 wt.-% carbon black, and most preferably at least 90 wt.-% carbon black, based on the total weight of the recovered carbon black, and/or

(ii) comprises 50 to 95 wt.-% carbon black, preferably 50 to 90 wt.-% carbon black, more preferably 65 to 87 wt.-% carbon black, more preferably 70 to 85 wt.-% carbon black, and most preferably 75 to 80 wt.-% carbon black, based on the total weight of the recovered carbon black.

40. The method according to any one of the preceding aspects, wherein the recovered carbon black has a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification.

41. The method according to any one of the preceding aspects, wherein the aqueous flotation slurry comprises a frother, preferably the frother comprises aliphatic monohydric alcohols, polyglycol ethers and/or polyglycols, more preferably methyl isobutyl carbinol.

42. The method according to any one of the preceding aspects, wherein the aqueous flotation slurry comprises a frother, wherein the frother is present in the aqueous flotation slurry in an amount of 0.01 to 1 mL per 100 g of recovered carbon black, preferably 0.05 to 0.9 mL per 100 g of recovered carbon black, more preferably 0.1 to 0.8 mL per 100 g of recovered carbon black, even more preferably 0.2 to 0.7 mL per 100 g of recovered carbon black, and most preferably even more preferably 0.3 to 0.6 mL per 100 g of recovered carbon black.

43. The method according to any one of the preceding aspects, wherein the concentration of recovered carbon black in the aqueous flotation slurry is 1 to 100 g/L, preferably 8 to 80 g/L, more preferably 10 to 60 g/L, even more preferably 12 to 40 g/L, and most preferably 14 to 30 g/L.

44. The method according to any one of the preceding aspects, wherein the aqueous flotation slurry comprises a collector, and preferably the collector comprises a non-ionic collector and/or an ionic collector, preferably 4-dodecylphenol, and/or hexadecane.

45. The method according to any one of the preceding aspects, wherein the collector comprises 4-dodecylphenol and another collector, such as hexadecane, in a ratio of 2/1 to 1/2.

46. The method according to any one of the preceding aspects, wherein the collector is present in the aqueous flotation slurry in an amount of 0.05 to 2 mL per 100 g of recovered carbon black, preferably 0.1 to 1.5 mL per 100 g of recovered carbon black, more preferably 0.2 to 1.0 mL per 100 g of recovered carbon black, even more preferably 0.3 to 0.6 mL per 100 g of recovered carbon black, and most preferably even more preferably 0.35 to 0.45 mL per 100 g of recovered carbon black.

47. The method according to any one of the preceding aspects, wherein the treatment of step (C) is carried out in a froth flotation device, such as mechanical froth flotation device, pneumatic froth flotation device, expansion froth flotation device and/or reverse-flotation unit.

48. The method according to any one of the preceding aspects, wherein the treatment of step (C) is carried out in a mechanical froth flotation device comprising a rotor, preferably the rotational speed of the rotor is 500 to 2000 rpm, such as 1100 to 1300 rpm, 900 to 1100 rpm, or 700 to 900 rpm.

49. The method according to any one of the preceding aspects, wherein the treatment of step (C) comprises the formation of bubbles and the carbon black of the recovered carbon black is attached to the bubbles.

50. The method according to any one of the preceding aspects, wherein the concentrate of step (D) is filtered to obtain wet treated carbon black and the wet treated carbon black is pelletized.

51. The method according to any one of the preceding aspects, wherein the flotation tailings are recycled into the aqueous flotation slurry of step (B).

52. The method according to any one of the preceding aspects, wherein the concentrate of step (D) is filtered, and optionally dried, to obtain the treated carbon black.

53. The method according to any one of the preceding aspects, wherein the flotation tailings comprise hydrophilic components, preferably comprising ash, preferably ash comprises silica.

54. The treated carbon black to any one of the preceding aspects, wherein treated carbon black has a coke content below 15 wt.-%, preferably below 10 wt.-%, more preferably below 5 wt.-%, and most preferably below 1 wt.-%, based on the total weight of the treated carbon black.

55. The method according to any one of the preceding aspects, wherein the treated carbon black of step (C) comprises 65 to 100 wt.-% carbon, preferably 70 to 99 wt.-%, more preferably 80 to 95 wt.-%, even more preferably 82 to 90 wt.-%, and most preferably 85 to 88 wt.-%, based on the total weight of the carbon black of step (A), as measured as described in the specification.

56. The method according to any one of the preceding aspects, wherein the carbon content of the treated carbon black of step (C) is higher than the carbon content of the recovered carbon black of step (A), and/or wherein the carbon content of the treated carbon black of step (C) is more than 5 wt.-%, preferably more than 8 wt.-%, more preferably more than 10 wt.-%, even more preferably more than 15 wt.-%, and most preferably more than 20 wt.-%, higher compared to the carbon content of the carbon black of step (A), wherein the carbon content is determined by elemental analysis as described in the specification.

57. The method according to any one of the preceding aspects, wherein the treated carbon black has a C (carbon) content of at least 60 wt.-%, preferably at least 63 wt.-%, more preferably 65 to 90 wt.-%, even more preferably 70 wt.-% to 88 wt.-%, and most preferably 75 to 87 wt.-%, wherein the wt.-% is based on the total weight of the treated carbon black and wherein the carbon content is determined by elemental analysis as described in the specification.

58. The method according to any one of the preceding aspects, wherein the treated carbon black has a C (carbon) content of at least 3 wt.-% more than C (carbon) content of the recovered carbon black used in step (A), preferably at least 4 wt.-% more than C (carbon) content of the recovered carbon black used in step (A), more preferably at least 5 wt.-% more than C (carbon) content of the recovered carbon black used in step (A), even more preferably at least 6 wt.-% more than C (carbon) content of the recovered carbon black used in step (A)and most preferably at least 8 wt.-% more than C (carbon) content of the recovered carbon black used in step (A), determined as described in the specification.

59. The method according to any one of the preceding aspects, wherein the treated carbon black has an ash content in a range of from 1 to 25 wt.-%, preferably from 2 to 20 wt.-%, more preferably from 5 to 18 wt.-%, most preferably from 10 to 15 wt.-%, wherein the wt.-% is based on the total weight of the treated carbon black and wherein the ash content is determined according to ASTM D 1506-15 at 550 °C, 16 h.

60. The method according to any one of the preceding aspects, wherein the treated carbon black has a lower ash content compared to the ash content of the recovered carbon black used in step (A) and wherein the ash content is determined according to ASTM D 1506-15 at 550 °C, 16 h.

61. The method according to any one of the preceding aspects, wherein the treated carbon black has an ash content of at least 3 wt.-% less than ash content of the recovered carbon black used in step (A), preferably at least 4 wt.-% less than ash content of the recovered carbon black used in step (A), more preferably at least 5 wt.-% less than ash content of the recovered carbon black used in step (A), even more preferably at least 6 wt.-% less than ash content of the recovered carbon black used in step (A)and most preferably at least 8 wt.-% less than ash content of the recovered carbon black used in step (A), wherein the ash content is determined according to ASTM D 1506-15 at 550 °C, 16 h.

62. The method according to any one of the preceding aspects, wherein the treated carbon black comprise ash, wherein ash comprise metal, metal compounds, silicon, oxygen, sulphur and/or silica, preferably metal comprises zinc, silicon, calcium, cobalt, manganese, potassium, aluminium, and/or iron.

63. The method according to any one of the preceding aspects, wherein the treated carbon black has an iodine adsorption number of 30 to 80 mg/g, preferably 40 to 70 mg/g, more preferably 45 to 65 mg/g, the iodine adsorption number is measured according to ASTM D1510-17.

64. The method according to any one of the preceding aspects, wherein the treated carbon black has a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g. 39.

65. The method according to any one of the preceding aspects, wherein the treated carbon black has a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 m2/g.

66. The method according to any one of the preceding aspects, a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

67. The method according to any one of the preceding aspects, the obtained treated carbon black has

(a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g..

68. The method according to any one of the preceding aspects, wherein the treated carbon black has a volatile content measured at 950°C of 0.1 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%.

69. The method according to any one of the preceding aspects, wherein the treated carbon black

(i) has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or

(ii) has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or

(iii) has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

70. The method according to any one of the preceding aspects, wherein at least 70 wt.-%, preferably at least 80 wt.-%, more preferably at least 90 wt.-%, most preferably at least 98 wt.-%, of the treated carbon black has a particle size of more than 2 mm, wherein the particle size is measured according to ASTM D 1511-12 (2017).

71. The method according to any one of the preceding aspects, wherein at least 50 wt.-%, preferably at least 60 wt.-%, more preferably at least 70 wt.-%, most preferably at least 80 wt.-%, of the treated carbon black has a particle size of more than 1 to 2 mm, wherein the particle size is measured according to ASTM D 1511-12 (2017).

72. The method according to any one of the preceding aspects, wherein at least 50 wt.-%, preferably at least 60 wt.-%, more preferably at least 70 wt.-%, most preferably at least 80 wt.-%, of the treated carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

73. The method according to any one of the preceding aspects, wherein

(i) the volume average particle size x50 of the treated carbon black is from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or
(ii) the volume average particle size x90 of the treated carbon black is from 50 to 400 $\mu$m preferably 80 to 350 $\mu$m, more preferably 110 to 300 $\mu$m, and most preferably 140 to 240 $\mu$m, wherein the volume average particle size is preferably measured as described in the specification by dry measurement using laser diffraction, and/or
(iii) the volume average particle size x95 of the treated carbon black is from 80 to 300 $\mu$m preferably 100 to 350 $\mu$m, more preferably 120 to 300 $\mu$m, and most preferably 180 to 250 $\mu$m, wherein the volume average particle size is preferably measured as described in the specification by dry measurement using laser diffraction, and/or
(iv) the volume average particle size x99 of the treated carbon black is from 100 to 250 $\mu$m preferably 130 to 240 $\mu$m, more preferably 160 to 230 $\mu$m, and most preferably 180 to 220 $\mu$m, wherein the volume average particle size is preferably measured as described in the specification by dry measurement using laser diffraction.

74. The method according to any one of the preceding aspects, wherein

(i) the volume average particle size x50 of the treated carbon black is from 40 to 400 $\mu$m preferably 50 to 300 $\mu$m, more preferably 60 to 200 $\mu$m, and most preferably 80 to 200 $\mu$m, wherein the volume average particle size is preferably measured as described in the specification by dry measurement using laser diffraction, and/or
(ii) the volume average particle size x90 of the treated carbon black is from 40 to 300 $\mu$m preferably 80 to 250 $\mu$m, more preferably 120 to 200 $\mu$m, and most preferably 150 to 190 $\mu$m, wherein the volume average particle size is preferably measured as described in the specification by dry measurement using laser diffraction, and/or
(iii) the volume average particle size x95 of the treated carbon black is from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction, and/or
(iv) the volume average particle size x99 of the treated carbon black is from 70 to 250 $\mu$m preferably 80 to 200 $\mu$m, more preferably 90 to 190 $\mu$m, and most preferably 90 to 180 $\mu$m, wherein the volume average particle size is preferably measured as described in the specification by dry measurement using laser diffraction.

75. The method according to any one of the preceding aspects, wherein

(i) the volume average particle size x50 of the treated carbon black is from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or
(ii) the volume average particle size x90 of the treated carbon black is from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or
(iii) the volume average particle size x95 of the treated carbon black is from 10 to 200 $\mu$m preferably 20 to 120 $\mu$m, more preferably 30 to 100 $\mu$m, and most preferably 40 to 80 $\mu$m, wherein the volume average particle size is preferably measured as described in the specification by dry measurement using laser diffraction, and/or
(iv) the volume average particle size x99 of the treated carbon black is from 10 to 200 $\mu$m preferably 20 to 120 $\mu$m, more preferably 30 to 100 $\mu$m, and most preferably 50 to 70 $\mu$m, wherein the volume average particle size is preferably measured as described in the specification by dry measurement using laser diffraction.

76. The method according to any one of the preceding aspects, wherein

(i) the volume average particle size x50 of the treated carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or
(ii) the volume average particle size x90 of the treated carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or

(iii) the volume average particle size x95 of the treated carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction, and/or

(iv) the volume average particle size x99 of the treated carbon black is from 0.1 to 50 $\mu$m preferably 1 to 40 $\mu$m, more preferably 2 to 30 $\mu$m, and most preferably 3 to 20 $\mu$m, wherein the volume average particle size is preferably measured as described in the specification by dry measurement using laser diffraction.

77. The method according to any one of the preceding aspects, wherein the treated carbon black is milled, preferably wet milled.

78. The method according to any one of the preceding aspects, wherein the volume average particle size x50 of the treated carbon black is from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

79. The method according to any one of the preceding aspects, wherein the volume average particle size x90 of the treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

80. The method according to any one of the preceding aspects, wherein the volume average particle size x95 of the treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

81. The method according to any one of the preceding aspects, wherein volume average particle size x99 of the treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

82. The method according to any one of the preceding aspects, wherein the process further comprises the pyrolysis of particulate carbon black-containing feedstock before the gasification, wherein pyrolysis of particulate carbon black-containing feedstock comprises the pyrolysis of particulate carbon black-containing feedstock at a temperature of 450 °C to 710 °C and in the absence of oxygen, wherein a pyrolysis gas stream and a pyrolysis carbon black-containing particulate is obtained.

83. Carbon black obtained according to any one of the preceding aspects.

84. A mixture of carbon black obtained according to any one of the preceding aspects and virgin carbon black, preferably 10 to 20 wt.-% of carbon black obtained according to any one of the preceding aspects and 80 to 90 wt.-% of virgin carbon black, based on the total weight of the mixture, more preferably the wt.-% of the carbon black obtained according to any one of the preceding aspects and virgin carbon black sum up to 100 wt.-%.

85. A rubber article comprising carbon black comprising coke, preferably a treated carbon black produced according to any one of the preceding aspects, wherein the rubber article has an abrasion of less than 120 mm$^3$, measured at 23 °C DIN ISO 4649:2014-03, 10 N.

85A. A rubber article comprising carbon black comprising ash, preferably a treated carbon black produced according to any one of the preceding aspects, wherein the rubber article has an abrasion of less than 120 mm$^3$, measured at 23 °C DIN ISO 4649:2014-03, 10 N.

86. The rubber article according to aspect 85, wherein the rubber article has an abrasion of less than 110 mm$^3$, preferably less than 106 mm$^3$, more preferably 50 to 105 mm$^3$, and most preferably 90 to 105 mm$^3$, as measured at 23 °C DIN ISO 4649:2014-03, 10 N.

87. The rubber article according to any one of aspects 85 or 86, wherein the carbon black is a treated carbon black as defined in any one of the preceding aspects.

88. The rubber article according to any one of aspects 85 to 87, wherein the rubber article has a tensile strength of 21.5 to 30.0 Mpa, preferably 22.0 to 28 Mpa, as measured according to ISO 37 - 2012, S2.

89. The rubber article according to any one of aspects 85 to 88, wherein the rubber article has a topography relative peak area of less than 10 %, preferably less than 5 %, more preferably less than 2 %, and most preferably less than 1 %, wherein the topography relative peak area is measured as described in the specification.

90. The rubber article according to any one of aspects 85 to 89, wherein the rubber article has an elongation at break of more than 520 %, preferably 530 to 700 %, more preferably 550 to 700 %, even more preferably 600 to 700 %, and most preferably 615 to 700 %, as measured according to ISO 37 - 2012, S2.

91. The rubber article according to any one of aspects 85 to 90, wherein the rubber article has a Mooney viscosity of less than 65 Me, more preferably 30 to 64 Me, even more preferably 40 to 63 Me, and most preferably 50 to 61 Me, as measured according to ISO 289-1:2015.

92. The rubber article according to any one of aspects 85 to 91, wherein the carbon black comprises metal, metal compounds, silicon, oxygen, sulphur and/or silica, preferably metal comprises zinc, silicon, calcium, cobalt, manganese, potassium, aluminium, and/or iron.

93. The method or the rubber article according to any one of the preceding aspects, wherein the obtained treated carbon black after the flotation and/or the carbon black has a coke content of 0.1 to 15 wt.-%, preferably 0.2 to 10 wt.-%, more preferably 1 to 5 wt.-%, and most preferably 1 to 3 wt.-%, based on the total weight of the treated carbon black or carbon black.

94. The rubber article according to any one of aspects 85 to 93, wherein (A) the peak count of 5 to 10 $\mu$m is less than 300, preferably less than 200, more preferably less than 100, and most preferably less than 50, wherein the topography relative peak area is measured as described in the specification, and/or (B) the peak count of 5 to 10 $\mu$m is less than 6, preferably less than 5, more preferably less than 4, and most preferably less than 3, wherein the topography relative peak area is measured as described in the specification, and/or (C) the peak count of 10 to 15 $\mu$m is less than 1.5, and most preferably less than 1, wherein the topography relative peak area is measured as described in the specification.

CHNS content determination by means of elemental analyser The carbon mass fraction, hydrogen mass fraction, nitrogen mass fraction and sulfur mass fraction (i.e. carbon weight fraction, hydrogen weight fraction, nitrogen weight fraction and sulfur weight fraction) are measured using an elemental analyser with thermal conductivity and infrared detector. The analyser is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$acomp. \quad = \quad a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg ± 1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w} \, ,$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n} \, ,$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}} \, ,$$

wherein f is the daily factor, $c_{theor.}$ is the theoretical factor, $c_{act.}$ is the actual calculated elemental concentration.

Then, 8 tin capsules each containing 5 mg ± 1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w} \, ,$$

wherein c is the elemental concentration (in %), a is the absolute element content (in mg), f is the daily factor, and w is the actual amount of the sample.

Determined particle size distribution

The particle size distribution is determined by dry measurement with the measurement system from Sympatec GmbH (Germany) consisting of VIBRI: conveyor unit (by vibration); RODOS: compressed air dispersion; and HELOS BR:

measuring unit, laser diffraction. As sample preparation, 0.5 g of the dried material was filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material were recorded. Before each measurement, a background measurement of 15 sec was recorded to minimize noise. The obscuration range was controlled by the feeding rate with automatic adjustment and the hopper gap in the range of 5-15% using an integral factor of 0.2. The dispersing air pressure was set to 3 bar. Reported values (volume distribution) represent the average of three measurements after the data analysis using a standard analysis model in the instrument software.

**Volatiles at 950°C**

Volatiles at 950°C were measured using a thermogravimetric instrument of Fa. LECO Instrumente GmbH (TGA-701) according to the following protocol: Pans were dried at 650°C for 30 min. The carbon black materials were stored in a desiccator equipped with desiccant prior to measurements. Baked-out pans were loaded in the instrument, tared and filled with between 0.5 g to 10 g carbon black material. Then, the oven of the TGA instrument loaded with the sample-filled pans was gradually heated up to 105°C (heating rate 20°C/min) by automated software control and the samples were dried until a constant mass was achieved. Subsequently, the pans were closed by lids, the oven was purged with nitrogen (99.9 vol% grade) and heated up to 950°C (heating rate 20°C/min). The oven temperature was kept at 950°C for 7 min. The content of volatiles at 950°C was calculated using the following equation:

$$Volatiles = \frac{m(prior\ to\ heating) - m(after\ 7\ minutes@950°C)}{m(prior\ to\ heating)} \cdot 100\%.$$

**EXAMPLES**

**Examples A** - **Fluidized bed reactor**

In the following examples, a commercial available recovered carbon black 1 was used. The commercially available recovered carbon black 1 is obtained after the pyrolysis of waste tire rubber granulate.

Table 1: Particle size distribution of the commercially available recovered carbon black 1 measured according to DIN 66165-1 (2022) and DIN 66165-2 (2022).

| Fraction | Weight % |
|---|---|
| > 2.0mm | 55.38 |
| > 1.4mm | 16.82 |
| > 1.0mm | 9.70 |
| > 710$\mu$m | 6.35 |
| > 500$\mu$m | 2.54 |
| > 250$\mu$m | 3.46 |
| > 125$\mu$m | 2.39 |
| > 80$\mu$m | 0.87 |
| < 80$\mu$m | 2.51 |

Gasification of recovered carbon black

The gasification was carried out in a fluidized bed reactor. The conditions for the gasification are shown in table 2. The time indication the said table refers to the residence time in the fluidized bed reactor.

The gasification was carried out in a fluidized bed reactor. The setup comprises a vertically arranged tube made of Inconel having a length of 1,500 mm and inner diameter of 108 mm defining the reactor chamber. The Inconel tube is enclosed on its outer surface along the long axis by insulation and heating modules made from in total eight Fibrothal semishells (each having a power of 2,500 W), forming four heating zones. A gas flow is introduced at the bottom end of the tube from a connected gas supply system. The first heating zone from the bottom end of the tube is used for heating up the gas flow to the desired temperature, the remaining heating zones are for treating material filled into the reactor chamber at the desired temperature. Controlling of the heating shells is done via thermal elements, being positioned between the reactor's external wall and the corresponding heating shell. The temperature in each heating zone is further measured inside the reaction chamber by temperature sensors. Filling of the discontinuous operating fluidized bed is done via the reactor's head.

The reaction chamber of the reactor was filled to about half its volume with the recovered carbon black 1 to be treated, corresponding to an amount of about 800-2000 g. The heating modules were then powered (100% power) and the carbon black heated to the respective target temperature as indicated below under a continuous gas flow (mixture of steam and nitrogen: 240 Nl/h nitrogen and 140 ml/h water (liquid) = 42 mol % of $H_2O$). When the respective target temperature was approached the power supplied to the heating modules was regulated to hold the respective target temperature. The sample was then maintained at the respective target temperature for the indicated dwell time under the continuous gas low. Subsequently, the heating modules were switched off and the sample was cooled down under the continuous gas flow to ambient temperature and then exposed to air and removed from the reactor for characterization and testing of the obtained de-coked recovered carbon black according to example 1A.

Table 2: Reaction conditions for the gasification.

| Example | CB feedstock | Temp. / °C | Time / min | $H_2O$ |
|---|---|---|---|---|
| 1A | Recovered carbon black 1 | 800 | 60 | X |

Flotation of recovered carbon black

The commercially available recovered carbon black 1 as well as the de-coked recovered carbon black according to example 1A were milled to the desired particle size distribution as indicated in table 3. rCB 2, rCB 3, rCB4 is the milled recovered carbon black 1 and rCB 5 is the milled de-coked recovered carbon black according to example 1A.

Table 3: Particle distributions of rCBs 2 to 5.

| | rCB 2 | rCB 3 | rCB 4 | rCB 5 |
|---|---|---|---|---|
| x50 / $\mu$m | 48.74 | 39.37 | 19.26 | 30.19 |
| x90 / $\mu$m | 138.12 | 102.32 | 40.61 | 78.14 |
| x95 / $\mu$m | 162.62 | 122.21 | 46.50 | 90.24 |
| x99 / $\mu$m | 202.39 | 160.68 | 56.94 | 115.11 |
| Ash content[1] / wt.-% | 19.56 | 21.19 | 24.42 | 19.91 |
| Calculated carbon content[2] / wt.-% | 80.44 | 78.81 | 75.59 | 80.09 |

[1]The ash content is determined according to ASTM D 1506-15 at 550 °C, 16 h.
[2]The calculated carbon content was calculated from the ash content. The calculated carbon content is 1 - ash content in wt.-%.

The flotation tests are carried out on a flotation device from the Laarmann Group B.V. (LMFTM Flotation Test Machine). This is an externally ventilated apparatus with a single-finger rotor and a stator consisting of radially arranged blades of the Galigher-Agitair type.

The flotation experiments begin by filling the cell with 2.5 litres of distilled water. The collector mixture is then prepared in a separate container, if a collector mixture is to be used for the experiments, and emulsified by stirring. The rCB sample is then weighed with an accuracy of ±0.01g. The rotor is then set to the conditioning speed of 1500 rpm and the rCB sample is added to the water. The air supply is initially closed. The dispersion is stirred for three minutes in order to wet the solid particles with water. At the same time, the collector/collector mixture is emulsified in the required concentration using ultrasound in 100 ml distilled water. After the three minutes have elapsed, the collector/collector mixture is added to the water/rCB dispersion. This dispersion is stirred for a further minute to allow the collector molecules and the solid particles to collide. The frother methyl isobutyl carbinol (MIBC) is then added to the slurry and stirred for a further two minutes. Conditioning is now complete and the agitator speed is set to the process speed. The air supply is now opened and adjusted and the separation process begins. For a period of ten minutes, the foam is continuously skimmed off the slurry using a small scoop until the foam takes on a light color. At the end of the ten minutes, the air supply is closed, the rotor is switched off and the process ends. The concentrate and the slurry are then carefully poured into two different containers.

The concentrate and slurry fractions are first vacuum-filtered separately. The filter cake is then dried at 110°C in a drying oven. The duration of drying depends on the mass to be dried. The dried samples are then weighed and compared to the initial weight in order to determine the yields. The selectivity of the process is estimated by determining the ash content according to ASTM D 1506-15 at 550 °C, 16 h.

The results of each example are indicated in the table 4.

Table 4: Flotation experiments.

| | Comparative Ex. 1 | Comparative Ex. 2 | Comparative Ex. 3 | Comparative Ex. 4 | Comparative Ex. 5 | Comparative Ex. 6 |
|---|---|---|---|---|---|---|
| **Aqueous flotation slurry** | | | | | | |
| rCB | 1 | 2 | 2 | 2 | 2 | 2 |
| rCB concentration[3] / g/L | 15 | 15 | 15 | 15 | 15 | 15 |
| Ash content[1] of the rCB / wt.-% | 21.39 | 19.56 | 19.56 | 19.56 | 19.56 | 19.56 |
| Collector | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% |
| Collector concentration[4] / mL/100g rCB | 0.4 | **0.4** | **0.3** | **0.2** | 0.4 | 0.4 |
| Frother | MIBC | MIBC | MIBC | MISC | MISC | MISC |
| Frother concentration[5] / mL/100g rCB | 0.5 | 0.5 | 0.5 | 0.5 | **0.6** | **0.4** |
| Frother concentration[6] / $\mu$L/L water | 75 | 75 | 75 | 75 | 90 | **60** |
| **Process conditions** | | | | | | |
| Rotor speed / rpm | 1000 | 1000 | 1000 | 1000 | 1000 | 1000 |
| Flotation time / min | 10 | 10 | 10 | 10 | 10 | 10 |
| Air flow / L/min | 6 | 6 | 6 | 6 | 6 | 6 |
| **Concentrate** | | | | | | |
| Total yield / wt.-% | 40.11 | 67.80 | 61.26 | 46.39 | 74.78 | 51.56 |
| Ash content[1] / wt.-% | 15.67 | 14.50 | 14.60 | 14.10 | 14.80 | 14.50 |
| Reduction of the ash content[7] / wt.-% | 5.72 | 5.06 | 4.97 | 5.46 | 4.76 | 5.06 |
| **Flotation tailings** | | | | | | |
| Total yield / wt.-% | 56.98 | 28.59 | 34.90 | 49.95 | 22.13 | 44.47 |
| Ash content[1] / wt.-% | 18.20 | 24.50 | 23.00 | 23.10 | 29.40 | 20.17 |
| Accumulation of the ash content[8] / wt.-% | -3.19 | 4.94 | 3.44 | 3.54 | 9.84 | 0.61 |

[3]rCB concentration g per L water
Collector concentration mL per 100g of rCB.
[5]Frother concentration mL per 100g of rCB
[6]Frother concentration $\mu$L per L water
[7]Reduction of the ash content: Comparison of the initial ash content and the ash content of the obtained carbon black.
[8]Accumulation of the ash content: Comparison of the ash content of the flotation tailings and the initial ash content.

Table 4 continued: Flotation experiments.

| | Comparative Ex. 7 | Comparative Ex. 8 | Comparative Ex. 9 | Comparative Ex. 10 | Comparative Ex. 11 |
|---|---|---|---|---|---|
| **Aqueous flotation slurry** | | | | | |
| rCB | 3 | 3 | 3 | 3 | 3 |
| rCB concentration[3] / g/L | 15 | 15 | 15 | 15 | 15 |
| Ash content[1] of the rCB / wt.-% | 21.19 | 21.19 | 21.19 | 21.19 | 21.19 |
| Collector | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% |
| Collector concentration[4] / mL/100g rCB | **0.4** | **0.3** | **0.2** | 0.4 | 0.4 |
| Frother | MIBC | MIBC | MIBC | MIBC | MIBC |
| Frother concentration[5] / mL/100g rCB | 0.5 | 0.5 | 0.5 | **0.6** | **0.4** |
| Frother concentration[6] / $\mu$L/L water | 75 | 75 | 75 | **90** | **60** |
| **Process conditions** | | | | | |
| Rotor speed / rpm | 1000 | 1000 | 1000 | 1000 | 1000 |
| Flotation time / min | 10 | 10 | 10 | 10 | 10 |
| Air flow / L/min | 6 | 6 | 6 | 6 | 6 |
| **Concentrate** | | | | | |
| Total yield / wt.-% | 65.91 | 61.50 | 46.13 | 69.12 | 65.13 |
| Ash content[1] / wt.-% | 15.8 | 15.8 | 16.00 | 15.80 | 15.60 |
| Reduction of the ash content[7] / wt.-% | 5.39 | 5.39 | 5.19 | 5.39 | 5.59 |
| **Flotation tailings** | | | | | |
| Total yield / wt.-% | 31.29 | 35.55 | 50.96 | 28.21 | 31.68 |
| Ash content[1] / wt.-% | 28.20 | 26.60 | 23.20 | 28.21 | 31.68 |
| Accumulation of the ash content[8] / wt.-% | 7.01 | 5.41 | 2.01 | 9.31 | 7.21 |

Table 4 continued: Flotation experiments.

| | Comparative Ex. 12 | Comparative Ex. 13 | Comparative Ex. 14 | Comparative Ex. 15 | Comparative Ex. 16 |
|---|---|---|---|---|---|
| **Aqueous flotation slurry** | | | | | |
| rCB | 4 | 4 | 4 | 4 | 4 |
| rCB concentration[3] / g/L | 15 | 15 | 15 | 15 | 15 |
| Ash content[1] of the rCB / wt.-% | 24.42 | 24.42 | 24.42 | 24.42 | 24.42 |
| Collector | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% |

(continued)

| | Comparative Ex. 12 | Comparative Ex. 13 | Comparative Ex. 14 | Comparative Ex. 15 | Comparative Ex. 16 |
|---|---|---|---|---|---|
| **Aqueous flotation slurry** | | | | | |
| Collector concentration[4] / mL/100g rCB | **0.4** | **0.3** | **0.2** | 0.4 | 0.4 |
| Frother | MIBC | MIBC | MIBC | MIBC | MIBC |
| Frother concentration[5] / mL/100g rCB | 0.5 | 0.5 | 0.5 | **0.6** | **0.4** |
| Frother concentration[6] / $\mu$L/L water | 75 | 75 | 75 | **90** | **60** |
| **Process conditions** | | | | | |
| Rotor speed / rpm | 1000 | 1000 | 1000 | 1000 | 1000 |
| Flotation time / min | 10 | 10 | 10 | 10 | 10 |
| Air flow / L/min | 6 | 6 | 6 | 6 | 6 |
| **Concentrate** | | | | | |
| Total yield / wt.-% | 63.78 | 62.97 | 53.01 | 67.88 | 63.29 |
| Ash content[1] / wt.-% | 19.10 | 19.60 | 19.20 | 19.30 | 19.00 |
| Reduction of the ash content[7] / wt.-% | 5.32 | 4.82 | 5.22 | 5.12 | 5.42 |
| **Flotation tailings** | | | | | |
| Total yield / wt.-% | 33.36 | 33.50 | 43.36 | 29.61 | 33.71 |
| Ash content[1] / wt.-% | 30.60 | 30.40 | 27.80 | 31.60 | 30.30 |
| Carbon content / wt.-% | 69.40. | 69.60 | 72.20 | 68.40 | 69.70 |
| Accumulation of the ash content[8] / wt.-% | 6.18 | 5.98 | 3.38 | 7.18 | 5.88 |

Table 4 continued: Flotation experiments.

| | Comparative Ex. 17 | Comparative Ex. 18 | Comparative Ex. 19 | Comparative Ex. 20 | Comparative Ex. 21 | Comparative Ex. 22 | Comparative Ex. 23 |
|---|---|---|---|---|---|---|---|
| **Aqueous flotation slurry** | | | | | | | |
| rCB | 2 | 2 | 2 | 2 | 2 | 2 | 2 |
| rCB concentration[3] / g/L | **50** | **40** | **30** | 50 | 50 | 50 | 15 |
| Ash content[1] of the rCB / wt.-% | 21.19 | 21.19 | 21.19 | 21.19 | 21.19 | 21.19 | 21.19 |
| Collector | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% | DDP/HEX 50/50 vol.-% |
| Collector concentration[4] / mL/100g rCB | 0.4 | 0.4 | 0.4 | 0.4 | 0.4 | 0.4 | 0.4 |
| Frother | MIBC | MIBC | MIBC | MIBC | MIBC | MIBC | MIBC |

(continued)

| | Compar ative Ex. 17 | Compar ative Ex. 18 | Compar ative Ex. 19 | Compar ative Ex. 20 | Compar ative Ex. 21 | Compar ative Ex. 22 | Compar ative Ex. 23 |
|---|---|---|---|---|---|---|---|
| **Aqueous flotation slurry** | | | | | | | |
| Frother concentra-tion[5] / mL/100g rCB | 0.5 | 0.5 | 0.5 | 0.5 | 0.5 | 0.5 | 0.5 |
| Frother concentra-tion[6] / $\mu$L/L water | 250 | 200 | 150 | 250 | 250 | 250 | 75 |
| **Process conditions** | | | | | | | |
| Rotor speed / rpm | 1000 | 1000 | 1000 | 1000 | 1000 | 1200 | 800 |
| Flotation time / min | 10 | 10 | 10 | 10 | 10 | 10 | 10 |
| Air flow / L/min | 6 | 6 | 6 | 3.5 | 10 | 6 | 6 |
| **Concentrate** | | | | | | | |
| Total yield / wt.-% | 83.92 | 89.75 | 80.17 | 80.34 | 87.14 | 85.12 | 80.75 |
| Ash content[1] / wt.-% | 15.61 | 15.70 | 14.83 | 15.00 | 15.80 | 15.74 | 15.08 |
| Reduction of the ash content[7] / wt.-% | 5.58 | 5.49 | 6.36 | 6.19 | 5.39 | 5.45 | 6.11 |
| **Flotation tailings** | | | | | | | |
| Total yield / wt.-% | 13.56 | 8.29 | 17.81 | 17.13 | 10.85 | 12.65 | 17.48 |
| Ash content[1] / wt.-% | 34.47 | 58.40 | 30.33 | 34.00 | 39.20 | 37.10 | 32.70 |
| Accumulation of the ash content[8] / wt.-% | 13.28 | 37.21 | 9.14 | 12.81 | 18.01 | 15.91 | 11.51 |

Table 4 continued: Flotation experiments.

| | Comparativ e Ex. 17 | Comparativ e Ex. 18 | Comparativ e Ex. 19 | Comparativ e Ex. 20 | Comparativ e Ex. 21 |
|---|---|---|---|---|---|
| **Aqueous flotation slurry** | | | | | |
| rCB | 2 | 2 | 2 | 2 | 2 |
| rCB concentration[3] / g/L | 15 | 15 | 15 | 15 | 15 |
| Ash content[1] of the rCB / wt.-% | 21.19 | 21.19 | 21.19 | 21.19 | 21.19 |
| Collector | HEX | HEX | HEX | **No collector** | **No collector** |
| Collector concentra-tion[4] / mL/100g rCB | **0.4** | **0.3** | **0.2** | **No collector** | **No collector** |
| Frother | MIBC | MIBC | MIBC | MIBC | MIBC |
| Frother concentration[5] / mL/100g rCB | 0.5 | 0.5 | 0.5 | **0.5** | **0.4** |
| Frother concentration[6] / $\mu$L/L water | 75 | 75 | 75 | **75** | **60** |

(continued)

| Process conditions | | | | | |
|---|---|---|---|---|---|
| Rotor speed / rpm | 1000 | 1000 | 1000 | 1000 | 1000 |
| Flotation time / min | 10 | 10 | 10 | 10 | 10 |
| Air flow / L/min | 6 | 6 | 6 | 6 | 6 |
| **Concentrate** | | | | | |
| Total yield / wt.-% | 55.29 | 49.85 | 15.02 | 13.83 | 11.34 |
| Ash content[1] / wt.-% | 14.40 | 14.60 | 18.80 | 17.80 | 1.71 |
| Reduction of the ash content[7] / wt.-% | 6.79 | 6.59 | 2.39 | 3.39 | 3.34 |
| **Flotation tailings** | | | | | |
| Total yield / wt.-% | 15.87 | 17.96 | 31.41 | 82.95 | 86.51 |
| Ash content[1] / wt.-% | 24.00 | 22.80 | 18.40 | 18.2 | 18.8 |
| Accumulation of the ash contents / wt.-% | 2.81 | 1.61 | -2.79 | -2.99 | -2.39 |

Table 4 continued: Flotation experiments.

| | Ex. 22 | Ex. 23 | Ex. 24 |
|---|---|---|---|
| **Aqueous flotation slurry** | | | |
| rCB | 5 | 5 | 5 |
| rCB concentration[3] / g/L | 15 | **50** | 15 |
| Ash content[1] of the rCB / wt.-% | 19.91 | 19.91 | 19.91 |
| Collector | DDP/HEX 50/50 vol.-% | DDP/HEX 50/50 vol.-% | DDP/HEX 50/50 vol.-% |
| Collector concentration[4] / mL/100g rCB | 0.4 | 0.4 | **0.512** |
| Frother | MIBC | MIBC | MIBC |
| Frother concentration[5] / mL/100g rCB | 0.5 | 0.5 | 0.5 |
| Frother concentration[6] / $\mu$L/L water | 75 | 250 | 75 |
| **Process conditions** | | | |
| Rotor speed / rpm | 1000 | 1000 | 1000 |
| Flotation time / min | 10 | 10 | 10 |
| Air flow / L/min | 6 | 6 | 6 |
| **Concentrate** | | | |
| Total yield / wt.-% | 15.05 | 15.58 | 20.73 |
| Ash content[1] / wt.-% | 15.20 | 16.60 | 13.83 |
| Reduction of the ash content[7] / wt.-% | 3.99 | 2.59 | 5.37 |
| **Flotation tailings** | | | |
| Total yield / wt.-% | 80.50 | 83.37 | n.D |
| Ash content[1] / wt.-% | 17.40 | 18.40 | n.D |

(continued)

| Flotation tailings | | | |
|---|---|---|---|
| Accumulation of the ash content[8] / wt.-% | -1.79 | -0.79 | n.D |

The ash content of recovered carbon blacks could be beneficially reduced by flotation. Accordingly, the obtained treated carbon black can be beneficially used for the manufacturing of rubber articles such as tires.

## Examples B - Multiple Hearth furnace

Rubber granulate 1, i.e. Gummigranulat 1,6 - 3,2 mm, used in the experiments was obtained from ESTATO Umweltservice GmbH (ESTATO), Germany. The rubber granulate was derived from waste tires and comprises synthetic rubber (SBR) and natural rubber (NR). However, it is also possible to use different particulate carbon black-containing feedstocks such as plastic granulates or biomass-based granulates. The rubber granulate 1 comprises carbon black.

The rubber granulate 1 was transported on a conveyor belt and then fed into a 36 inch multiple hearth furnace having six hearths (floors) from above via a double flap. On each of the six hearths, both the temperature and the residence time of the rubber granulate 1 on the respective floor could be set. The temperature could be regulated using natural gas burners. Each floor was equipped with its own burner. The dwell time could be set via the modification of the number of baffles on the rotating arms and the shaft rotation speed. Said configuration was adapted according to Table 5. This results in different residence times of the used granulate on the different levels. The fewer arms there are, the longer the retention time. In addition to the different temperatures and residence times, the different levels can be operated with varying gas atmospheres. While only the gases required to operate the burners are used on the first two levels, additional steam is introduced on the lowest level. While a temperature of 700 °C is set on the first two shelves, a temperature of 850 °C were selected on the lower four hearths. In this case, the multiple hearth furnace can be divided into two reaction zones. While the pyrolysis reaction takes place on the first two hearths, the test parameters on the lower four hearths are selected so that decoking can take place.

Table 5: Process conditions used for the multiple hearth furnace (MHF) process.

| Hearth | Number of used rabble arms | Residence time / min | Temp. / °C | Subjected steam / kg h$^{-1}$ | Bed depth (moving bed depth) / cm | Dead bed depth / cm |
|---|---|---|---|---|---|---|
| Example 1B | | | | | | |
| 1 | 3 | 12 | 700 | | 1.87 | 4.3 |
| 2 | 2 | 18 | 700 | | 1.83 | 4.3 |
| 3 | 1 | 36 | 850 | | 3.65 | 4.3 |
| 4 | 1 | 36 | 850 | | 3.65 | 4.3 |
| 5 | 1 | 36 | 850 | | 3.65 | 4.3 |
| 6 | 1 | 36 | 850 | 10 | 3.65 | 4.3 |

In table 6, the process conditions are summarized. The air flow (Air) as well as the natural gas flow (NG) is indicated for the burner of hearths 3 to 6.

Table 6: Process conditions used for the MHF process.

| Example | 1B |
|---|---|
| Air / Nm$^3$/h | 102 |
| NG / Nm$^3$/h | 11.48 |
| Steam flow / kg h$^{-1}$ | 10 |
| Production Rate kg/h | 7.15 |
| Feeding rate kg/ h | 24.5 |
| Pyrolysis Yield / wt.-% | 43 |

(continued)

| Example | 1B |
|---|---|
| De-coking Yield / wt.-% | 69 |
| Total solid Yield / wt.-% | 30 |
| Calc. removed carbon / wt.-% | 31 |

The pyrolysis yield is the yield after the pyrolysis in the first two hearths. For the determination of the pyrolysis yield, the gasification process was omitted and the yield after the pyrolysis was noted. The de-coking yield is the yield after the gasification based on the feedstock subjected to the gasification. It is believed that the coke present in the feedstock has a higher reactivity compared to carbon black. If the temperature during the gasification is below 950 °C, the coke is selectivity converted instead of the carbon black. At higher temperatures, the selectivity decreases.

The properties of two commercial recovered carbon blacks (A1 (producer 1) and A2 (producer 2); both obtained after the pyrolysis of waste tire rubber granulate) and the obtained treated carbon blacks are shown in table 7.

Table 7: Properties of the treated carbon black.

| | Commercial rCB A1 | Commercial rCB A2 | Example 2A |
|---|---|---|---|
| **Toluene transmittance[9] at 300 nm[1] / %** | 0.0 | 9.5 | 94.25 |
| **Toluene transmittance[9] at 355 nm[1] / %** | 18.4 | 89.5 | 99.50 |
| **Toluene transmittance[10] at 425 nm[2] / %** | 79.2 | 99.7 | 99.76 |
| Ash content[11] / wt.-% | 23.9 | 22.8 | 30.7 |
| STSA[12] / m$^2$ g$^{-1}$ | 60.9 | 58.1 | 64.3 |
| BET[13] / m$^2$ g$^{-1}$ | 72.4 | 71.3 | 82.5 |
| C / wt.%[14] | n.D. | n.D. | 70.27 |
| H / wt.%[14] | n.D. | n.D. | 0.33 |
| N / wt.%[14] | n.D. | n.D. | 0.09 |
| S / wt.%[14] | n.D. | n.D. | 1.97 |
| O / wt.% [14] | n.D. | n.D. | 1.34 |
| H:C / atomic ratio | n.D. | n.D. | 0.056 |
| O:C / atomic ratio | n.D. | n.D. | 0.014 |
| Cumulative Pore Volume[15] for pore sizes of 0.3 to 0.70 nm / cm$^3$/g | n.D. | 0.00646 | 0.0181 |
| Cumulative Pore Volume[15] for pore sizes of 0.3 to 0.75 nm / cm$^3$/g | n.D. | 0.00703 | 0.0187 |
| Cumulative Pore Volume[15] for pore sizes of 0.3 to 1.5 nm / cm$^3$/g | n.D. | 0.0138 | 0.0329 |

[9]Transmittance (Transmittance of Toluene Extract) was measured in accordance with ASTM D 1618-18 against toluene expect that the wavelength for the measurement was 300 nm or 355 nm instead of 425 nm.
[10]Transmittance at 425 nm in toluene (Transmittance of Toluene Extract) was measured according to ASTM D 1618-18 against toluene.
[11]The ash content was measured according to ASTM D 1506-15 at 550 °C, 16 h.
[12]STSA surface area was measured according to ASTM D6556-21.
[13]BET surface area was measured according to ASTM D6556-21.
[14]The mass factions are determined as mentioned below (CHNS content determination and O content determination).
[15]Cumulative Pore Volume having a pore size of 0.3 to 1.5 nm and 0.3 to 0.75 nm are determined as mentioned below.

It can be observed that the ash content for the carbon black after the gasification in the MHF is higher than for the two commercial rCBs. This is due to the fact that additional steam and a treatment at higher temperatures was used in the MHF in order to de-coke the material. This causes some of the carbon to react with the steam to form carbon monoxide. Consequently, a reduced carbon content results in a higher ash content.

Moreover, the carbon black obtained from the tests in the MHF has higher transmission values than two commercial rCBs. It can therefore be concluded that the carbon black produced in the reactor is loaded with fewer organic, toluene extractable contaminants (such as aliphatics and small aromatics), than the two commercial rCBs.

Moreover, a high cumulative pore volume (microporosity) for carbon black that is recycled from a rubber granulate is desired. The commercial recovered carbon blacks generally have a low cumulative pore volume. These pores are important for the applicability of the carbonaceous filler in a rubber matrix, as the high surface area and magnitude of Van Der Waal interactive forces in these small pores commonly act as sites for chemical bonding. In carbon black, these pores can exist either within or between primary particles. In recovered carbon black, coke deposition during the pyrolysis process would likely occur in these microporous regions, reducing the overall microporous surface area and microporous volume. This is anticipated to have a negative impact on in-application tests.

The higher amount of cumulative pore volume of the carbon black suggests that the MHF is more thermally efficient and there is less residence time required for complete primary pyrolysis. This results in less coking, so less blocking of micropores compared to commercial alternatives.

Furthermore, the gasification additionally improves the microporosity of the carbon black. Thus, the gasification of the coke causes a more microporous surface, which is anticipated to improve in rubber application processes by increasing the polymer-filler interaction potential.

## Measurement of the Cumulative Pore Volume

Adsorption and desorption isotherms for $CO_2$ at 273 K were collected between the pressure range (P/P0) of 0.05 and 1 on a Quantachrome Autosorb iQ3 Gas Sorption Analyser (Software: Model 7 ASiQWin Version: 5.21). Briefly, 0.4 g of carbon sample was placed in a de-gassed sample cell and was de-gassed at 300 degrees Celsius under vacuum to remove adsorbed gases and moisture from the sample surface. The degassed sample was re-weighed and loaded onto the analysis station, where it was exposed to a further degas step under helium, followed by gaseous $CO_2$ at close to condensation temperatures (273 K) within the pressure range of 0.01 - 1 bar.

As the saturation pressure of $CO_2$ at 273 K is very high, low relative pressure measurements necessary for micropore analysis are achieved in the range of moderate absolute pressures (1-760 torr).

Following the gas sorption isotherm collection, it was subsequently processed using the Non-Linear Density Functional theory using a pre-paramatised kernel provided on the Quantachrome Instruments AutoSorb iQ3 Gas Sorption Analyser titled ("COz adsorption on to carbon at 273 K").

## In-Rubber tests

The rubber compositions are mentioned in table 8. The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 11 and 13 minutes (Virgin carbon black: 11 min, Example 2A: 11 min, rubber granulate pyrolyzed and de-coked in the MHF reactor: 11 min, Commercial rCB A1: 13 min) at a temperature of 165 °C.

Example 2B is the recovered carbon black of Example 2A (i.e. rubber granulate pyrolyzed and de-coked in the MHF reactor) treated by flotation. The flotation conditions were the same as described for Example 23 mentioned above.

Table 8: The rubber compositions using different carbon blacks as noted below.

|  | Unit | Composition |
|---|---|---|
| Rubber[16] | phr | 100 |
| Carbon black[17] | phr | 50 |
| ZnO[18] | phr | 3 |
| Stearic Acid[19] | phr | 2 |

(continued)

| | Unit | Composition |
|---|---|---|
| 6PPD[20] | phr | 1 |
| Sulfur[21] | phr | 1.5 |
| CBS[22] | phr | 1.5 |

[16]Rubber ESBR, Buna SB 1500, Resinex Deutschland GmbH
[17]Carbon black: Virgin carbon black, recovered carbon black of Example 2A (see table 3), Commercial rCB A1 (see table 5), or recovered carbon black of Example 2A treated by flotation as mentioned above.
[18]ZnO, ZNO RS RAL 844 C, Norkem B.V.
[19]Stearic Acid, Palmera B 1804, Caldic Deutschland GmbH
[20]6PPD, VULKANOX 4020/LG, Brenntag GmbH
[21]Sulfur, MAHLSCHWEFEL 80/90° unbeölt, Avokal GmbH
[22]CBS, VULKACIT CZ/EG-C, Lanxess N.V.

The properties of the specimens are indicated in table 9.

Table 9: Properties of the specimens including the respective carbon black.

| Carbon black | Virgin carbon black | Ex. 2A | Example 2B | Commercial rCB A1 |
|---|---|---|---|---|
| Tensile Strength[23]/ MPa | 21.4 | 22.5 | 22.9 | 21.1 |
| Elongation at Break[24] / % | 519 | 667 | 638 | 612 |
| Abrasion[25] / mm$^3$ | 94 | 112 | 101 | 128 |
| Tear Resistance[26] (GRAVES) / N/mm | 19.3 | 20.5 | 19.0 | 171 |
| Topography relative peak area[27] / % | 0.55 | 0.74 | 0.96 | 15 |
| Peak Count[27] 2-5$\mu$m | 10.5 | 28 | 32 | 305.5 |
| Peak Count[27] 5-10$\mu$m | 3 | 2 | 1 | 6 |
| Peak Count[27] 10-15$\mu$m | 0 | 0 | 0 | 1.5 |
| Mooney Viscosity / ME[28] | 57 | 62 | 60 | 65 |

[23]Tensile Strength was measured ISO 37 - 2012, S2.
[24]Elongation at Break was measured ISO 37 - 2012, S2.
[25]Abrasion was measured at 23 °C DIN ISO 4649:2014-03, 10 N.
[26]Tear Resistance GRAVES was measured DIN ISO 34-1:2016-09, method B, variant (b).
[27]The relative peak area was measured as described below.
[28]Mooney viscosity was measured according to ISO 289-1:2015.

As can be seen from table 9, the carbon blacks according to examples 2A and 2B reveal improved in-rubber properties compared to a commercially available recovered carbon black that was not de-coked. The tensile strength, elongation at break and the tear resistance is even better compared to virgin carbon black.

The flotation of the recovered carbon black of example 2A also results in an improved abrasion resistance that is similar to the abrasion of virgin carbon black.

The topography relative peak area tests a surface of a polymer which has filler dispersed. A topographic surface is produced which measures any defects in the polymer. Less peak counts mean a better dispersed filler and thus, a higher performance compound. The topography relative peak area of examples 2A and 2B are significantly lower compared to commercially available recovered carbon black A1 and comparable to virgin carbon black. Commercially available recovered carbon black A1 has large number of cemented aggregates which form clusters up to 2-15 $\mu$m. The carbon blacks treated by the method according to the present invention comprises significantly lower counts of the aforementioned clusters. Moreover, the flotation of the carbon black could further reduce the peak counts of 5 to 10 $\mu$m clusters.

The intrinsic viscosity of the polymer containing the commercially available recovered carbon black is very high, due to the large amount of friction these larger clusters cause during the polymer mixing process. A high viscosity reduced the amount of mixing that a compounder can achieve. In comparison, the carbon black according to examples 2A and 2B have a much lower viscosity so that more carbon black material can be dispersed. Moreover, the flotation of the carbon black could further reduce the intrinsic viscosity.

In sum, the method according to the present invention reveals improved processing (i.e., lower viscosity), improved dispersion (lower peak areas in topography methods), therefore producing a stronger (higher tensile strength), stiffer (higher modulus 300%), and more tear resistant compound than that filled by commercially available alternative rCb materials.

**Topography relative peak area**

Topography relative peak area is a measure for filler dispersion determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Fullstoffdispersion in Gummimischungen mittels einer Oberflachentopographie", Thesis, 1998 at the Münster University of Applied Sciences, and DE 199 17975 C2.

It will be appreciated that various modifications can be made, and that many changes can be made in the preferred embodiments without departing from the principle of the invention.

**Claims**

1. A method for the treatment of recovered carbon black comprising,

   (A) providing recovered carbon black and gasification of the recovered carbon black at a temperature of 730 °C to 950 °C,
   (B) subjecting the recovered carbon black of step (A) after the gasification to an aqueous flotation slurry,
   (C) treating the recovered carbon black in the aqueous flotation slurry by flotation,
   (D) separating the concentrate comprising the treated carbon black and the flotation tailings.

2. The method according to claim 1, wherein the flotation is a froth flotation.

3. The method according to any one of the preceding claims 1 or 2, wherein the recovered carbon black is derived from the pyrolysis of rubber granulate, plastic granulate, and/or biomass-based granulate, preferably rubber granulate.

4. The method according to any one of the preceding claims, wherein

   (i) the volume average particle size x50 of the recovered carbon black is from 50 to 800 $\mu$m preferably 80 to 500 $\mu$m, more preferably 100 to 400 $\mu$m, and most preferably 130 to 250 $\mu$m, wherein the volume average particle size is preferably measured as described in the specification by dry measurement using laser diffraction, and/or
   (ii) the volume average particle size x90 of the recovered carbon black is from 50 to 400 $\mu$m preferably 80 to 350 $\mu$m, more preferably 110 to 300 $\mu$m, and most preferably 140 to 240 $\mu$m, wherein the volume average particle size is preferably measured as described in the specification by dry measurement using laser diffraction, and/or
   (iii) the volume average particle size x95 of the recovered carbon black is from 80 to 300 $\mu$m preferably 100 to 350 $\mu$m, more preferably 120 to 300 $\mu$m, and most preferably 180 to 250 $\mu$m, wherein the volume average particle size is preferably measured as described in the specification by dry measurement using laser diffraction, and/or
   (iv) the volume average particle size x99 of the recovered carbon black is from 100 to 250 $\mu$m preferably 130 to 240 $\mu$m, more preferably 160 to 230 $\mu$m, and most preferably 180 to 220 $\mu$m, wherein the volume average particle size is preferably measured as described in the specification by dry measurement using laser diffraction.

5. The method according to any one of the preceding claims, wherein the recovered carbon black has a silicon (Si) content in a range of from 1.5 to 10.0 wt.-%, preferably from 1.8 to 6.0 wt.-%, more preferably from 2.0 to 5.0 wt.-%, most preferably from 2.2 to 4.5 wt.-%, wherein the wt.-% is based on the total weight of the recovered carbon black and wherein the silicon content is preferably determined by to Inductively Coupled Plasma Optical Emission Spectrometry (ICP-OES), more preferably the silicon content is determined as described in the specification.

6. The method according to any one of the preceding claims, wherein silica (or silicon in form of silica) is embedded in the carbon of the recovered carbon black, attached to the carbon of the recovered carbon black, attached on the surface of the carbon of the recovered carbon black, and/or associated in the carbon of the recovered carbon black.

7. The method according to any one of the preceding claims, wherein the recovered carbon black has an ash content in a range of from 5 to 30 wt.-%, preferably from 8 to 25 wt.-%, more preferably from 11 to 22 wt.-%, most preferably from 15 to 20 wt.-%, wherein the wt.-% is based on the total weight of the recovered carbon black and wherein the ash content is determined according to ASTM D 1506-15 at 550 °C, 16 h.

8. The method according to any one of the preceding claims, wherein the aqueous flotation slurry comprises a collector, preferably phenol collector, such as 4-dodecylphenol.

9. The method according to any one of the preceding claims, wherein the gasification is carried out at a temperature of 730 °C to 910 °C, preferably 730 °C to 900 °C, more preferably 740 to 890 °C, even more preferably 740 °C to 860 °C, and most preferably 790 to 850 °C.

10. The method according to any one of the preceding claims, wherein the gasification is carried out by using $H_2O$ and/or COz, preferably $H_2O$, and/or wherein the gasification is carried out by subjecting the recovered carbon black with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

11. The method according to any one of the preceding claims, wherein the treated carbon black has an ash content of at least 3 wt.-% less than ash content of the recovered carbon black used in step (A), preferably at least 4 wt.-% less than ash content of the recovered carbon black used in step (A), more preferably at least 5 wt.-% less than ash content of the recovered carbon black used in step (A), even more preferably at least 6 wt.-% less than ash content of the recovered carbon black used in step (A) and most preferably at least 8 wt.-% less than ash content of the recovered carbon black used in step (A), wherein the ash content is determined according to ASTM D 1506-15 at 550 °C, 16 h.

12. The method according to any one of the preceding claims, wherein the treated carbon black has a C (carbon) content of at least 50 wt.-%, preferably at least 50 to 80 wt.-%, more preferably 55 to 75 wt.-%, even more preferably 60 wt.-% to 72 wt.-%, and most preferably 62 to 70 wt.-%, wherein the wt.-% is based on the total weight of the recovered carbon black and wherein the carbon content is determined by elemental analysis as described in the specification, and/or wherein the treated carbon black has a C (carbon) content of at least 3 wt.-% more than C (carbon) content of the recovered carbon black used in step (A), preferably at least 4 wt.-% more than C (carbon) content of the recovered carbon black used in step (A), more preferably at least 5 wt.-% more than C (carbon) content of the recovered carbon black used in step (A), even more preferably at least 6 wt.-% more than C (carbon) content of the recovered carbon black used in step (A) and most preferably at least 8 wt.-% more than C (carbon) content of the recovered carbon black used in step (A), wherein the carbon content is determined by elemental analysis as described in the specification.

13. The method according to any one of the preceding claims, wherein the treated carbon black has an ash content in a range of from 1 to 25 wt.-%, preferably from 2 to 20 wt.-%, more preferably from 5 to 18 wt.-%, most preferably from 10 to 15 wt.-%, wherein the wt.-% is based on the total weight of the treated carbon black and wherein the ash content is determined according to ASTM D 1506-15 at 550 °C, 16 h, and/or wherein the treated carbon black has a lower ash content compared to the ash content of the recovered carbon black used in step (A) and wherein the ash content is determined according to ASTM D 1506-15 at 550 °C, 16 h.

14. A mixture of carbon black obtained according to any one of the preceding claims and virgin carbon black.

15. A rubber article comprising carbon black comprising coke, preferably a treated carbon black produced according to any one of the preceding claims, wherein the rubber article has an abrasion of less than 120 mm$^3$, measured at 23 °C DIN ISO 4649:2014-03, 10 N.

FIG. 1

FIG. 2

<u>300</u>

FIG. 3

FIG. 4

Europäisches
Patentamt

European
Patent Office

Office européen
des brevets

# EUROPEAN SEARCH REPORT

**Application Number**

EP 24 19 2597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COSTA SEBASTIÃO M. R. ET AL: "Production and Upgrading of Recovered Carbon Black from the Pyrolysis of End-of-Life Tires", MATERIALS, vol. 15, no. 6, 9 March 2022 (2022-03-09), page 2030, XP093080229, DOI: 10.3390/ma15062030 * Paragraphs: 4.3.1, 4.3.2, 4.1 * | 1-14 | INV. B03D1/00 B03D1/008 B03D1/02 C10B53/07 C10J3/00 C09C1/48 |
| Y | KR 101 161 116 B1 (K & AMP TECH [KR]; MINEWORLD CO LTD [KR]) 28 June 2012 (2012-06-28) * Claims: 1 Paragraphs: 0022, 0024, 0023 * | 1-14 | |
| Y | CN 112 194 171 A (ZHUHAI GREE GREEN RENEWABLE RESOURCES CO LTD ET AL.) 8 January 2021 (2021-01-08) * Claims: 1 * | 1-14 | |
| Y | CN 109 135 838 A (SHENZHEN RUIKE TIANQI TECH CO LTD) 4 January 2019 (2019-01-04) * Claims: 7 Paragraphs: 0025, 0024 * | 1-14 | **TECHNICAL FIELDS SEARCHED (IPC)** B03D B01D C10K |
| A | US 4 915 825 A (CHRISTIE RICHARD D [US] ET AL) 10 April 1990 (1990-04-10) * column 1, lines 28-36 column 4, lines 13-18 * | 2,8 | C10H C10B C10J C09C |
| X | US 2010/292383 A1 (FADER JOHN H [US]) 18 November 2010 (2010-11-18) * Claims: 1, 7 Paragraphs: 0010,0051,0052,0055 Tables: 2 * | 15 | |

-/--

The present search report has been drawn up for all claims

| Place of search | Date of completion of the search | Examiner |
|---|---|---|
| Munich | 2 January 2025 | Accettola, Francesca |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 19 2597

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 209 685 694 U (SHAANXI YANCHANG PETROLEUM GROUP CO LTD) 26 November 2019 (2019-11-26) * the whole document * | 1 | |
| A | CN 110 776 938 A (ZHONGYUAN HUANZI TECH CO LTD) 11 February 2020 (2020-02-11) * the whole document * | 1 | |

TECHNICAL FIELDS
SEARCHED (IPC)

The present search report has been drawn up for all claims

| Place of search | Date of completion of the search | Examiner |
|---|---|---|
| Munich | 2 January 2025 | Accettola, Francesca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2597

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2025

| Patent document cited in search report | | Publication date | Patent family member(s) | | Publication date |
|---|---|---|---|---|---|
| KR 101161116 | B1 | 28-06-2012 | NONE | | |
| CN 112194171 | A | 08-01-2021 | NONE | | |
| CN 109135838 | A | 04-01-2019 | NONE | | |
| US 4915825 | A | 10-04-1990 | NONE | | |
| US 2010292383 | A1 | 18-11-2010 | AR | 068772 A1 | 02-12-2009 |
| | | | AR | 068838 A1 | 09-12-2009 |
| | | | AR | 068839 A1 | 09-12-2009 |
| | | | CA | 2702218 A1 | 16-04-2009 |
| | | | CA | 2702228 A1 | 16-04-2009 |
| | | | CA | 2702233 A1 | 16-04-2009 |
| | | | CN | 101889043 A | 17-11-2010 |
| | | | CN | 101889046 A | 17-11-2010 |
| | | | CN | 101896278 A | 24-11-2010 |
| | | | EP | 2197948 A1 | 23-06-2010 |
| | | | EP | 2203503 A1 | 07-07-2010 |
| | | | EP | 2207620 A1 | 21-07-2010 |
| | | | JP | 2011500310 A | 06-01-2011 |
| | | | JP | 2011500886 A | 06-01-2011 |
| | | | JP | 2011503248 A | 27-01-2011 |
| | | | KR | 20100100779 A | 15-09-2010 |
| | | | KR | 20100100780 A | 15-09-2010 |
| | | | KR | 20100101079 A | 16-09-2010 |
| | | | TW | 200924860 A | 16-06-2009 |
| | | | TW | 200938573 A | 16-09-2009 |
| | | | TW | 200940619 A | 01-10-2009 |
| | | | US | 2010206968 A1 | 19-08-2010 |
| | | | US | 2010210782 A1 | 19-08-2010 |
| | | | US | 2010292383 A1 | 18-11-2010 |
| | | | WO | 2009048591 A1 | 16-04-2009 |
| | | | WO | 2009048592 A1 | 16-04-2009 |
| | | | WO | 2009048593 A1 | 16-04-2009 |
| CN 209685694 | U | 26-11-2019 | NONE | | |
| CN 110776938 | A | 11-02-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020117388 A1

- DE 19917975 C2

**Non-patent literature cited in the description**

- **J.-B. DONNET et al.** Carbon Black:Science and Technology
- Filler Dispersion Analysis by Topography Measurements. **A. WEHMEIER**. Technical Report TR 820. Degussa GmbH

- Entwicklung eines Verfahrens zur Charakterisierung der Fullstoffdispersion in Gummimischungen mittels einer Oberflachentopographie. **A. WEHMEIER**. Thesis. Münster University of Applied Sciences, 1998